# EUROPEAN PATENT APPLICATION

(11) **EP 4 625 158 A1**
(43) Date of publication of application: **01.10.2025**
(21) Application number: 25160213.2
(22) Date of filing: 26.02.2025
(51) Int. Cl.: G06F 9/38

(54) **CONCURRENT DECODE OF COMPLEX INSTRUCTIONS HAVING VARYING NUMBERS OF DECODED INSTRUCTIONS**

(30) Priority: 29.03.2024 US 202418622852
(71) Applicant: INTEL Corporation, Santa Clara, CA 95054 (US)
(72) Inventor: Russell, Christopher, Austin TX, 78748 (US); Subramaniam, Kameswar, Austin TX, 78750 (US); Madaelil, Thomas, Austin TX, 78749 (US)
(74) Representative: Samson & Partner Patentanwälte mbB

(57) **Abstract**

A processor of an aspect includes decode circuitry to decode a first subset of instructions and a second subset of instructions. The decode circuitry is to concurrently decode at least two instructions of the first subset of instructions. The first subset of instructions is to be decoded into varying numbers of decoded instructions ranging from at least two to at least ten. The decode circuitry is only able to decode fewer instructions of the second subset of instructions at a time than the at least two instructions of the first subset of instructions. Each of the second subset of instructions is to be decoded into at least two decoded instructions. The processor also includes circuitry coupled with the decode circuitry to receive decoded instructions from the decode circuitry. Other processors, methods, systems, and instructions are disclosed.

## Description

### BACKGROUND

### Technical Field

Embodiments described herein generally relate to processors. In particular, embodiments described herein generally relate to decoding instructions in processors.

### Background Information

Most modern processors have an instruction set that includes both simple instructions and complex instructions. The processors generally include decode circuitry to decode each of the instructions of an instruction set into one or more decoded instructions.

### BRIEF DESCRIPTION OF THE DRAWINGS

Various examples in accordance with the present disclosure will be described with reference to the drawings, in which:
**FIG. 1** is a block diagram of an embodiment of a processor in which embodiments of the invention may be implemented.
**FIG. 2** is a block diagram of an embodiment of a processor having decode circuitry.
**FIG. 3** is a block diagram of an example embodiment of a suitable first subset of complex instructions.
**FIG. 4** is a block diagram of an example embodiment of a suitable second subset of complex instructions.
**FIG. 5** is a block diagram of a first detailed example embodiment of decode circuitry.
**FIG. 6** is a block diagram of a second detailed example embodiment of decode circuitry.
**FIG. 7** illustrates an example computing system.
**FIG. 8** illustrates a block diagram of an example processor and/or System on a Chip (SoC) that may have one or more cores and an integrated memory controller.
**FIG. 9(A)** is a block diagram illustrating both an example in-order pipeline and an example register renaming, out-of-order issue/execution pipeline according to examples.
**FIG. 9(B)** is a block diagram illustrating both an example in-order architecture core and an example register renaming, out-of-order issue/execution architecture core to be included in a processor according to examples.
**FIG. 10** illustrates examples of execution unit(s) circuitry.
**FIG. 11** is a block diagram of a register architecture according to some examples.
**FIG. 12** illustrates examples of an instruction format.
**FIG. 13** illustrates examples of an addressing information field.
**FIG. 14** illustrates examples of a first prefix.
**FIGS. 15(A)****-(D)** illustrate examples of how the R, X, and B fields of the first prefix in **FIG. 14** are used.
**FIGS. 16(A)****-(B)** illustrate examples of a second prefix.
**FIG. 17** illustrates examples of a third prefix.
**FIG. 18** is a block diagram illustrating the use of a software instruction converter to convert binary instructions in a source instruction set architecture to binary instructions in a target instruction set architecture according to examples.

### DETAILED DESCRIPTION OF EMBODIMENTS

Disclosed herein methods and apparatus to decode instructions. In the following description, numerous specific details are set forth (e.g., specific circuitry, instructions, processor configurations, microarchitectural details, sequences of operations, etc.). However, embodiments may be practiced without these specific details. In other instances, well-known circuits, structures, and techniques have not been shown in detail to avoid obscuring the understanding of the description.

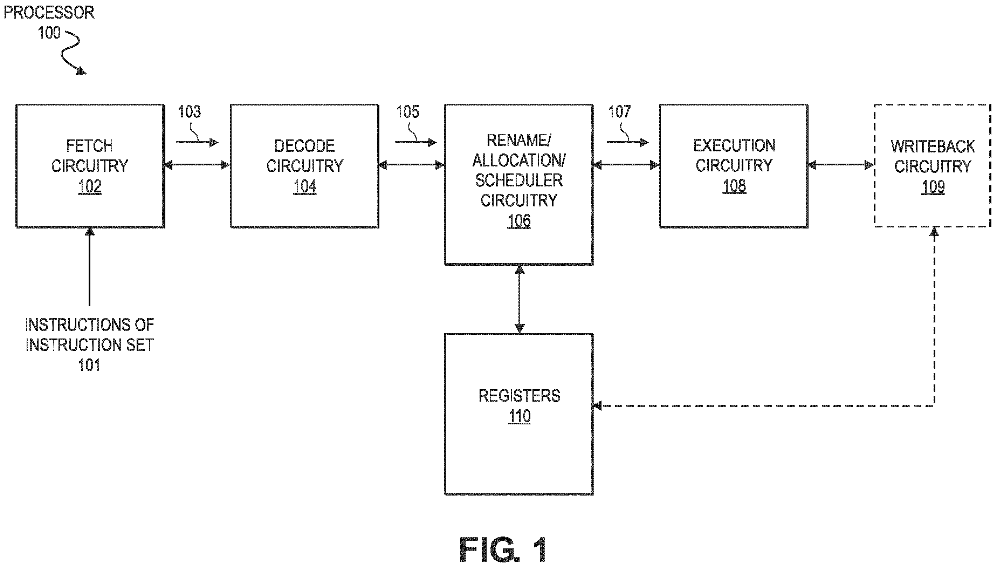

**FIG. 1** is a block diagram of an embodiment of a processor 100 in which embodiments of the invention may be implemented. In some embodiments, the processor may be a general-purpose processor (e.g., a general-purpose microprocessor or central processing unit (CPU) of the type used in desktop, laptop, or other computers). Alternatively, the processor may be a special-purpose processor. Examples of suitable special-purpose processors include, but are not limited to, network processors, communications processors, cryptographic processors, graphics processors, co-processors, embedded processors, digital signal processors (DSPs), and controllers (e.g., microcontrollers). The processor may have any of various complex instruction set computing (CISC) architectures, reduced instruction set computing (RISC) architectures, very long instruction word (VLIW) architectures, hybrid architectures, and other types of architectures. In some embodiments, the processor may include (e.g., be disposed on) at least one integrated circuit or semiconductor die.

The processor includes fetch circuitry 102. The fetch circuitry is operative to fetch instructions 101 of an instruction set of the processor. The instruction set is part of the instruction set architecture (ISA) of the processor and includes the native instructions that the processor is operative to decode. The instructions of the instruction set may represent macroinstructions, machine-level instructions, assembly language instructions, or other such instructions that are provided to the processor for execution.

The processor includes decode circuitry 104 coupled with the fetch circuitry to receive the fetched instructions 103. The decode circuitry may be operative to decode each of the fetched instructions into one or more decoded instructions 105. The decoded instructions may represent microinstructions, microoperations, microcode, or other lower-level instructions (e.g., that are lower-level than the macroinstructions or other instructions of the instruction set of the processor). The decode circuitry may output the decoded instructions 105. The decode circuitry may be implemented using decode mechanisms including, but not limited to, read only memory (ROM) based decode circuitry, programmable logic array (PLA) based decode circuitry, look-up table based decode circuitry, decode circuitry based on other decode mechanisms, or any combination thereof. Various embodiments of suitable decode circuitry are discussed further below.

The processor includes rename/allocation/scheduler circuitry 106 coupled with the decode circuitry 104. The rename/allocation/scheduler circuitry may perform functionality for one or more of register renaming (e.g., renaming logical register operand values to physical operand values for example using a register alias table) and/or register allocation (e.g., allocating status bits and flags to the decoded instructions) and/or scheduling (e.g., scheduling the decoded instructions for execution by execution circuitry 108 out of an instruction pool, for example, using a reservation station).

The processor includes execution circuitry 108 coupled with the rename/allocation/scheduler circuitry 106 to receive decoded instructions 107 and operands used by the decoded instructions 107. The execution circuitry is operative to execute the decoded instructions. Various types of execution circuitry are suitable, such as, for example, arithmetic units, logic units, arithmetic and logic units (ALUs), vector or single-instruction, multiple-data (SIMD) execution units, memory access units, and the like.

The processor includes architectural registers 110 to store source and/or destination operands associated with the instructions 101 performed by the processor. Examples of suitable registers include, but are not limited to, general-purpose registers (GPRs), floating-point registers, and packed data, vector, or SIMD registers.

In some embodiments, the processor may optionally include write back circuitry 109. The write back circuitry may write back or commit results of execution to the architectural registers 110.

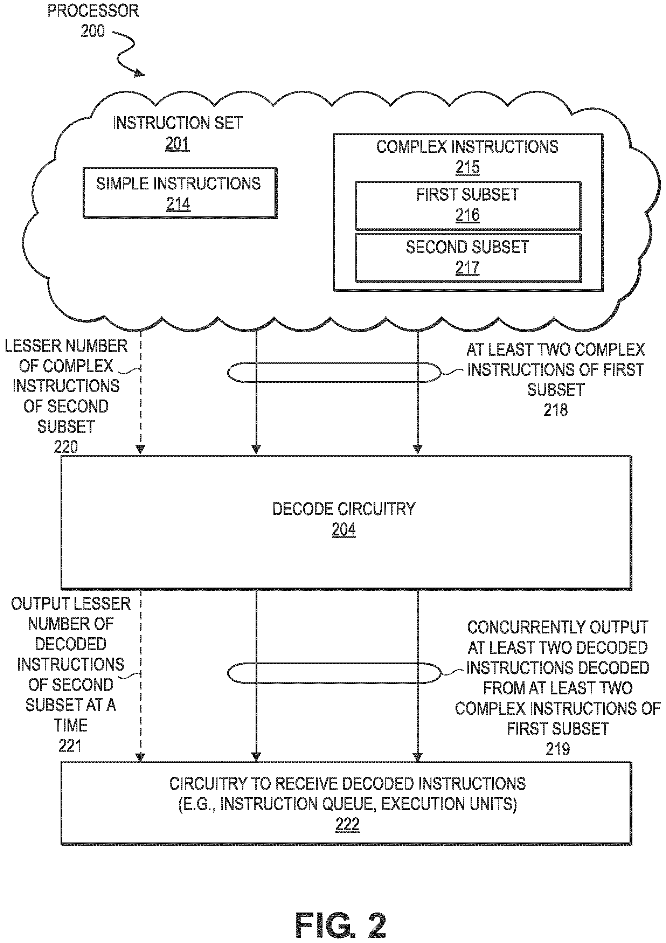

**FIG. 2** is a block diagram of an embodiment of a processor 200 having decode circuitry 204. In some embodiments, the decode circuity 204 may be used as the decode circuitry 104 in the processor of **FIG. 1****.** Alternatively, the decode circuitry 204 may be used in a similar or different processor.

The decode circuitry 204 may receive and is operative or able to decode instructions of an instruction set 201 of the processor. As mentioned above, the instruction set is part of the ISA of the processor and includes the native instructions that the processor is operative to decode. The instructions of the instruction set may represent macroinstructions, machine-level instructions, assembly language instructions, or other such instructions that are provided to the processor for execution. The instruction set may have either a fixed instruction length (e.g., 32-bits) or a variable instruction length (e.g., ranging from a byte to multiple bytes).

The instruction set 201 includes simple instructions 214. As used herein, the term "simple instruction" is used to broadly refer to an instruction that is to be decoded into a single decoded instruction. The word "simple" does not imply anything other than that the instruction is to be decoded into a single decoded instruction. The simple instructions may also be regarded as instructions of a first type. Without limitation, the instruction set may potentially include hundreds of different simple instructions. The instruction set also includes complex instructions 215. As used herein, the term "complex instruction" is used to refer to an instruction that is to be decoded into at least two decoded instructions. The word "complex" does not imply anything other than that the instruction is to be decoded into at least two decoded instructions. The complex instructions may also be regarded as instructions of a second type different than the first type of the simple instructions. Without limitation, the instruction set may potentially include hundreds of different complex instructions. Various complex instructions may be decoded into two, three, four, five, six, seven, eight, nine, ten, tens, hundreds, or even thousands of decoded instructions. The decoded instructions may represent microinstructions, microoperations, microcode, or other lower-level instructions (e.g., that are lower-level than the macroinstructions or other instructions of the instruction set 201). The complex instructions include a first subset of the complex instructions 216 and a second subset of the complex instructions 217.

In some embodiments, the first subset 216 of complex instructions may be decoded into varying numbers of decoded instructions, for example, ranging from at least two to at least ten, or tens, or even hundreds. In other words, the first subset of complex instructions is not limited to instructions that are only decoded into a fixed small number of decoded instructions (e.g., from two to five). By way of example, a first complex instruction of the first subset may be decoded into two decoded instructions, a second complex instruction of the first subset may be decoded into five decoded instructions, a third complex instruction of the first subset may be decoded into seven decoded instructions, a fourth complex instruction of the first subset may be decoded into ten decoded instructions, a fifth complex instruction of the first subset may be decoded into thirty decoded instructions, and a sixth complex instruction of the first subset may be decoded into sixty decoded instructions, to name just a few examples.

In some embodiments, the decode circuitry 204 may be operative or able to concurrently decode at least two complex instructions 218 of the first subset 216 of complex instructions. In some embodiments, the decode circuitry may be operative to concurrently output at least two decoded instructions 219 each decoded from a different corresponding one of the at least two complex instructions 218 of the first subset. In various embodiments, the decode circuitry may optionally be operative or able to concurrently decode at least three, at least four, at least five, at least six, at least seven, at least eight, at least nine, or more than nine complex instructions of the first subset of complex instructions. In various embodiments, the decode circuitry may optionally be operative or able to concurrently output at least three, at least four, at least five, at least six, at least seven, at least eight, at least nine, or more than nine decoded instructions each decoded from a different corresponding one of the at least three, at least four, at least five, at least six, at least seven, at least eight, at least nine, or more than nine complex instructions of the first subset of complex instructions.

In some embodiments, the decode circuitry 204 may only be operative or able to decode fewer and/or a lesser number of complex instructions 220 (e.g., one or more complex instructions) of the second subset 217 of complex instructions at a same time than the at least two complex instructions 218 of the first subset 216 of complex instructions. Likewise, in some embodiments, the decode circuitry may only be operative or able to output fewer and/or a lesser number of decoded instructions 221 (e.g., that are to have been decoded from the lesser number of complex instructions 220 of the second subset of complex instructions) at a same time than the output at least two decoded instructions 219. In some such embodiments, the lesser number of complex instructions 220 of the second subset may optionally be a single complex instruction of the second subset and the output lesser number of decoded instructions 221 may optionally be a single decoded instruction.

The decode circuitry 204 may be implemented using decode mechanisms including, but not limited to, read only memory (ROM) based decode circuitry, programmable logic array (PLA) based decode circuitry, look-up table based decode circuitry, decode circuitry based on other decode mechanisms, or any combination thereof. Various more detailed embodiments of suitable decode circuitry are discussed further below.

The processor also includes circuitry 222 coupled with the decode circuitry 204 to receive decoded instructions from the decode circuitry. In various embodiments, the circuitry 222 may be an instruction (e.g., a decoded instruction) queue (e.g., in the rename/allocation/scheduler circuitry 106 of **FIG. 1**), the rename/allocation/scheduler circuitry 106, execution units (e.g., the execution circuitry 106 of **FIG. 1****,** or the like.

In some embodiments, from some to most of the first subset 216 of complex instructions and the second subset217 of complex instructions may have one or more different characteristics. In some embodiments, the second subset may include at least some instructions that have more complex and/or more irregular and/or less repetitive control flow transfers (e.g., that jump, branch, or otherwise move around in the decoded instructions more complex and/or more irregular and/or less repetitive ways) than any instructions in the first subset. In some embodiments, from some to most to all of the instructions of the first subset may have either no control flow transfers, or may have very few control flow transfers, or may have more simple and/or more regular and/or more repetitive control flow transfers (e.g., that jump, branch, or otherwise move around in the decoded instructions in a simpler and/or more regular and/or more repetitive way) than at least some or most of the instructions of the second subset. By way of example, certain types of instructions like gather, scatter, repeat move, string instructions, and the like, tend to exhibit repetitive control flow transfer patterns. For example, the same set of decoded instructions used to gather one data element may be used repeatedly to gather each data element of a vector having multiple such data elements. In some embodiments, the second subset may include at least some instructions that are each to be decoded into more decoded instructions (e.g., from hundreds to thousands of decoded instructions) than any instructions in the first subset are to be decoded into.

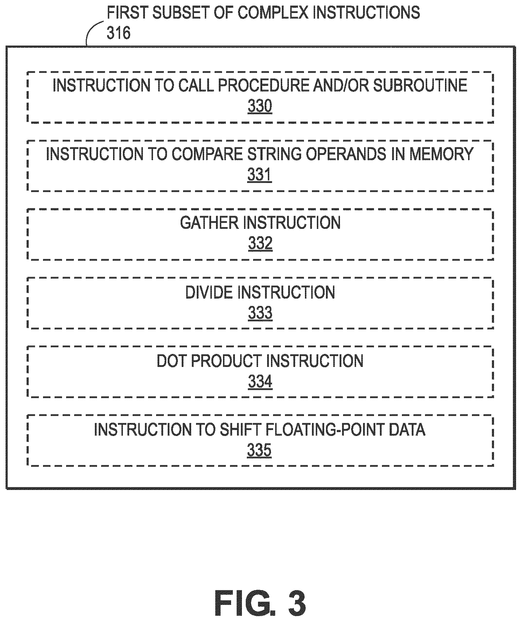

**FIG. 3** is a block diagram of an example embodiment of a suitable first subset of complex instructions 316. The first subset optionally includes an instruction to call a procedure and/or subroutine 330. One suitable example of such an instruction is the "CALL - Call Procedure" instruction in the Intel^{®} 64 and IA-32 Architectures, which saves procedure linking information on the stack and branches to the called procedure specified using the target operand.

The first subset optionally includes an instruction to compare string operands in memory 331. Suitable examples of such an instruction are the "CMPS/CMPSB/ CMPSW/CMPSD/CMPSQ - Compare String Operands" instructions in the Intel^{®} 64 and IA-32 Architectures. These instructions may compare the byte, word, doubleword, or quadword specified with the first source memory operand with the byte, word, doubleword, or quadword specified with the second source memory operand and set the status flags in the EFLAGS register according to the results. These instructions may optionally have a REP prefix for repeat or block comparisons.

The first subset optionally includes a gather instruction 332. The gather instruction may be used to gather data elements from potentially non-contiguous memory locations and store them in a destination register. Suitable examples of such an instruction are the "VGATHERDPS/VGATHERQPS - Gather Packed Single Precision Floating-Point Values Using Signed Dword/Qword Indices" instructions in the Intel^{®} 64 and IA-32 Architectures. These instructions may conditionally load up to 4 or 8 single-precision floating-point values from memory addresses specified by the memory operand and using dword indices.

The first subset optionally includes a divide instruction 333. One suitable example of such an instruction is the "DIV - Unsigned Divide" instruction in the Intel^{®} 64 and IA-32 Architectures. This instruction may divide unsigned the value in one or more first source registers (a first source operand or dividend) by a second source operand or divisor and store the result in one or more destination registers.

The first subset optionally includes a dot product instruction 334. One suitable example of such an instruction is the "DPPS - Dot Product of Packed Single Precision Floating-Point Values" instruction in the Intel^{®} 64 and IA-32 Architectures. This instruction may conditionally multiply packed single precision floating-point values in a first source operand with packed single precision floating-point values in a second source operand depending on a mask. If a condition mask bit is zero, the corresponding multiplication may be replaced by a value of 0.0. The four resulting single precision values may be summed into an intermediate result. The intermediate result may be conditionally broadcasted to the destination using a broadcast mask. Another example instruction is an analogous dot product instruction that operates on double precision floating-point values.

The first subset optionally includes an instruction to shift floating-point data 335. One suitable example of such an instruction is the "SHLD - Double Precision Shift Left" instruction in the Intel^{®} 64 and IA-32 Architectures. This instruction may shift a first source operand to the left the number of bits specified by a third source operand. A second source operand may provide bits to shift in from the right. The first source operand may be a register or a memory location. The second source operand may be a register. The result may be stored in a destination. Another example instruction is an analogous shift instruction that shifts right instead of left.

In various embodiments, the first subset may optionally include at least two, at least three, at least four, or all the instructions 330-335. It is to be appreciated that these are just a few representative examples of the types of instructions that may optionally be included in the first subset. The first subset may also optionally include more or many more different types of instructions.

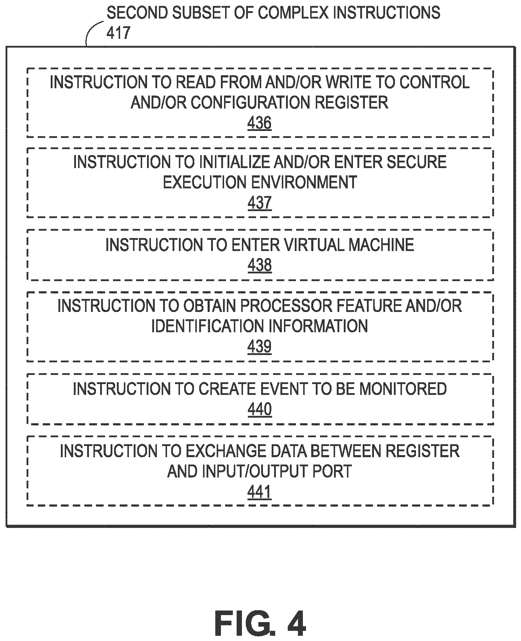

**FIG. 4** is a block diagram of an example embodiment of a suitable second subset of complex instructions 417. The second subset optionally includes an instruction to read from and/or write to a control and/or configuration register 436. One suitable example of such an instruction is the "RDMSR-Read from Model Specific Register" instruction in the Intel^{®} 64 and IA-32 Architectures. This instruction may read the contents of a model specific register (MSR), which is an example of a control and/or configuration register, specified in a source register into a destination register.

The second subset optionally includes an instruction to initialize and/or enter a secure execution environment 437. One suitable example of such an instruction is the "GETSEC[SENTER] - Enter a Measured Environment" instruction in the Intel^{®} 64 and IA-32 Architectures. The GETSEC[SENTER] instruction may initiate the launch of a measured environment and place the initiating logical processor (ILP) into the authenticated code execution mode. Another suitable example of such an instruction is the SKINIT instruction supported by certain AMD processors.

The second subset optionally includes an instruction to enter a virtual machine 438. Suitable examples of such an instruction are the "VMLAUNCH/VMRESUME - Launch/Resume Virtual Machine" instructions in the Intel^{®} 64 and IA-32 Architectures. These instructions may be used to respectively launch or resume a virtual machine managed by a current virtual machine control structure (VMCS).

The second subset optionally includes an instruction to obtain processor feature and/or identification information 439. One suitable example of such an instruction is the "CPUID - CPU Identification" instruction in the Intel^{®} 64 and IA-32 Architectures. This instruction may be used to return processor identification and feature information to one or more registers (e.g., EAX, EBX, ECX, and EDX registers) as determined by input entered in one or more registers (e.g., EAX and in some cases ECX).

The second subset optionally includes an instruction to set up or create an event to be monitored 440. One suitable example of such an instruction is the "MONITOR - Set Up Monitor Address" instruction in the Intel^{®} 64 and IA-32 Architectures. This instruction may be used to set up a linear or virtual address range to be monitored for store operations by monitoring hardware and may activate the monitoring hardware. A store to an address within the specified address range may trigger the monitoring hardware.

The second subset optionally includes an instruction to exchange data between a register and an input/output port 441. One suitable example of such an instruction is the "IN - Input from Port" instruction in the Intel^{®} 64 and IA-32 Architectures. This instruction may input data from a specified I/O port to a register. Another example instruction is an analogous "OUT - Output to Port" instruction that may output data from a register to a specified I/O port.

In various embodiments, the second subset may optionally include at least two, at least three, at least four, or all the instructions 436-441. It is to be appreciated that these are just a few representative examples of the types of instructions that may optionally be included in the second subset. The second subset may also optionally include more or many more different types of instructions.

In some embodiments, all the instructions of the first subset shown in **FIG. 3** may optionally also be included in the second subset shown in **FIG. 4****.** In other embodiments, any one or more or optionally all the instructions of the first subset shown in **FIG. 3** may optionally be excluded from the second subset shown in **FIG. 4****.** In some embodiments, any one or more or optionally all the instructions of the second subset shown in **FIG. 4** may optionally be excluded from the first subset shown in **FIG. 3****.**

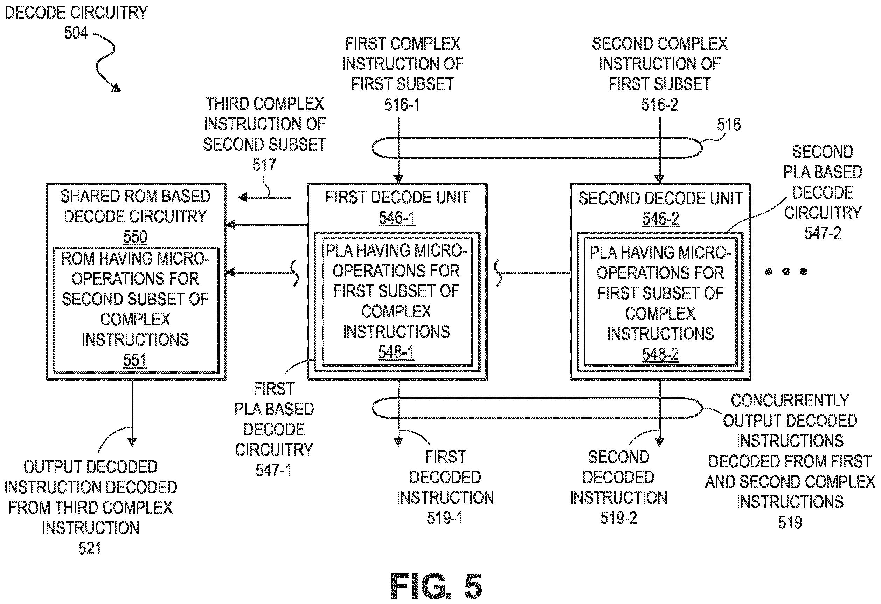

**FIG. 5** is a block diagram of a first detailed example embodiment of decode circuitry 504. In some embodiments, the decode circuity 504 may be used as the decode circuitry 104 in the processor of **FIG. 1** and/or as the decode circuitry 204 in the processor of **FIG. 2****.** Alternatively, the decode circuitry 504 may be used in similar or different processors.

The decode circuitry 504 may receive and is operative or able to decode instructions of an instruction set of the processor. In some embodiments, the decode circuitry may be operative or able to concurrently decode at least two complex instructions 516 of a first subset of complex instructions. The decode circuitry includes a first decode unit 546-1 to receive and decode a first complex instruction 516-1 of the first subset and a second decode unit 546-2 to concurrently receive and decode a second complex instruction 516-2 of the first subset. As shown by the three dots, the decode circuitry may optionally include one or more other decode units to each concurrently receive and decode one or more respective additional complex instruction of the first subset. In various embodiments, the decode circuitry may optionally be operative or able to concurrently decode at least three, at least four, at least five, at least six, at least seven, at least eight, at least nine, or more than nine complex instructions of the first subset of complex instructions. The complex instructions of the first subset of complex instructions may be similar to or the same as those described elsewhere herein. In some embodiments, the complex instructions of the first subset of complex instructions may be decoded into varying numbers of decoded instructions, for example, ranging from at least two to at least ten, or tens, or even hundreds.

In some embodiments, the decode circuitry may be operative to concurrently output at least two decoded instructions 519 each decoded from a different corresponding one of the at least two complex instructions 516 of the first subset. The first decode unit may output a first decoded instruction 519-1 that has been decoded from the first complex instruction 516-1 of the first subset. Likewise, the second decode unit may concurrently output a second decoded instruction 519-2 that has been decoded from the second complex instruction 516-2 of the first subset. The first decode unit includes a first programmable logic array (PLA) based decode circuitry 547-1 to decode the first complex instruction 516-1 of the first subset. The first PLA based decode circuitry has a PLA 548-1 including microoperations to implement each of the first subset of complex instructions. Similarly, the second decode unit includes a second PLA based decode circuitry 547-2 to decode the second complex instruction 516-2 of the first subset. The second PLA based decode circuitry has a PLA 548-2 including microoperations to implement each of the first subset of complex instructions. As shown by the three dots, the decode circuitry may optionally include one or more other decode units to each concurrently output a respective additional decoded instruction (e.g., there may be one or more clusters of decode units). In various embodiments, the decode circuitry may optionally be operative or able to concurrently output at least three, at least four, at least five, at least six, at least seven, at least eight, at least nine, or more than nine decoded instructions (e.g., each decoded from a different corresponding complex instruction of the first subset). One reason for including the first decode unit, the second decode unit, and optionally one or more other decode units is to help achieve a wider frontend issue bandwidth in which more than one instruction may be issued per clock cycle.

The decode circuitry also includes a shared read only memory (ROM) based decode circuitry 550 including ROM having microoperations or other decoded instructions to implement each of the instructions of the second subset. Examples of suitable shared ROM based decode circuitry include, but are not limited to, a microcode ROM and a micro-sequencer having a microoperation ROM. The shared ROM based decode circuitry is coupled with each of the first decode unit, the second decode unit, and one or more other optional decode units. The shared ROM based decode circuitry is to be shared by the first decode unit, the second decode unit, and one or more other optional decode units to decode complex instructions of the second set of complex instructions. For example, any one of the first decode unit, the second decode unit, and one or more other optional decode units may receive and identify a complex instruction of the second set of complex instructions and may signal and/or initiate a redirect to the shared ROM based decode circuitry to have the shared ROM based decode circuitry decode the complex instruction of the second set of complex instructions. As shown in the illustration, the first decode unit may signal the shared ROM based decode circuitry to have it decode a third complex instruction 517 of the second subset of complex instructions. As will be discussed further below, a latency (e.g., one or two clock cycles) may be incurred when entering the shared ROM based decode circuitry. This latency may tend to reduce performance. The shared ROM based decode circuitry may correspondingly output a decoded instruction 521 decoded from the third complex instruction 517 concurrently with the at least two decoded instructions 519. In some embodiments, the first decode unit, the second decode unit, and one or more other optional decode units, may not be operative or able to decode the complex instructions of the second subset of complex instructions and instead may rely on the shared ROM based decode circuitry to decode them.

As mentioned above, in some embodiments, the second subset may include at least some instructions that have more complex and/or more irregular and/or less repetitive control flow transfers (e.g., that jump, branch, or otherwise move around in the decoded instructions more complex and/or more irregular and/or less repetitive ways) than any instructions in the first subset. In some embodiments, from some to most to all of the instructions of the first subset may have either no control flow transfers, or may have very few control flow transfers, or have more simple and/or more regular and/or more repetitive control flow transfers (e.g., that jump, branch, or otherwise move around in the decoded instructions in a simpler and/or more regular and/or more repetitive way) than from some to most of the complex instructions of the second subset. By way of example, certain types of instructions like gather, scatter, repeat move, string instructions, and the like, tend to exhibit repetitive control flow transfer patterns. For example, the same set of decoded instructions used to gather one data element may be used repeatedly to gather each data element of a vector having multiple such data elements. Also, in some embodiments, the second subset may include at least some instructions that are each to be decoded into more decoded instructions (e.g., from hundreds to thousands of decoded instructions) than any instructions in the first subset are to be decoded into.

As a result, the shared ROM based decode circuitry 550, as compared to the PLA based decode circuitry 547, may be: (1) designed to be more general-purpose and flexible so that it can handle a wide variety of different types of complex instructions (e.g., all of the most complex instructions in the instruction set); and (2) designed so that it can decode complex instructions having more complex and/or more irregular and/or less repetitive control flow transfers. For these and other reasons, the shared ROM based decode circuitry generally tends to be relatively larger than the first PLA based decode circuitry 547-1.

In the illustrated embodiment, there is only the single shared ROM based decode circuitry 550. As a result, the shared ROM based decode circuitry is only operative or able to decode a single complex instruction of the second subset (e.g., the third complex instruction 517) at a time and is only operative or able to output a single corresponding decoded instruction (e.g., the decoded instruction 521) at a time. It is possible to replicate the shared ROM based decode circuitry to allow concurrently decoding two or more complex instructions of the second subset, and in an alternate embodiment the decode circuitry may optionally include two or more replicas of the shared ROM based decode circuitry. However, the shared ROM based decode circuitry generally tends to be relatively large, such that replication of the shared ROM based decode circuitry tends to be area, cost, and power prohibitive. Consequently, often there may only be a single shared ROM Based decode circuitry, or at least a lesser number of the shared ROM based decode circuitry than a number of decode units 546.

In some embodiments, from some to most to all of the instructions of the first subset may have either no control flow transfers, or may have very few control flow transfers, or have more simple and/or more regular and/or more repetitive control flow transfers than from some to most of the complex instructions of the second subset. As a result, the PLA based decode circuitry 547, as compared to the shared ROM based decode circuitry 550, may be: (1) designed to be less general-purpose and/or more special-purpose or specialized to handle instructions either without control flow transfers or having few control flow transfers or having repetitive control flow transfers; and (2) designed to decode complex instructions having less complex and/or more regular and/or more repetitive control flow transfers. PLAs also tend to be inherently better suited and/or more efficient at implementing instructions having repetitive control flow transfer patterns as compared to the ROM based decode circuitry. As a result, the PLA based decode circuitry 547 generally tends to be relatively smaller than the shared ROM based decode circuitry 550 and therefore more suitable for being replicated across the first and second decode units and optionally others. In one aspect, the PLA based decode circuitry may represent circuitry that does not have the complexity of the ROM based decode circuitry and which is smaller than and consumes less power than the ROM based decode circuitry.

Such replication potentially allows complex instructions of the first subset of complex instructions to be decoded concurrently or in parallel on each of the implemented decoders (e.g., if they are not decoding simple instructions). Moreover, this may be the case irrespective of whether the shared ROM based decode circuitry is tied up decoding a complex instruction of the second subset. This may help to avoid contention for the shared ROM based decode circuitry. This may also help to allow wider decode throughput for the complex instructions of the first subset. Moreover, in some cases, the first subset of instructions may include instructions of a type (e.g., gather, dot product, etc.) that significantly affect the overall performance of certain algorithms. In some embodiments, the PLA based decode circuitry may represent circuitry that is relatively cost effective to replicate across multiple decoder units and that is able to handle a subset of instructions that include instructions that significantly impact performance.

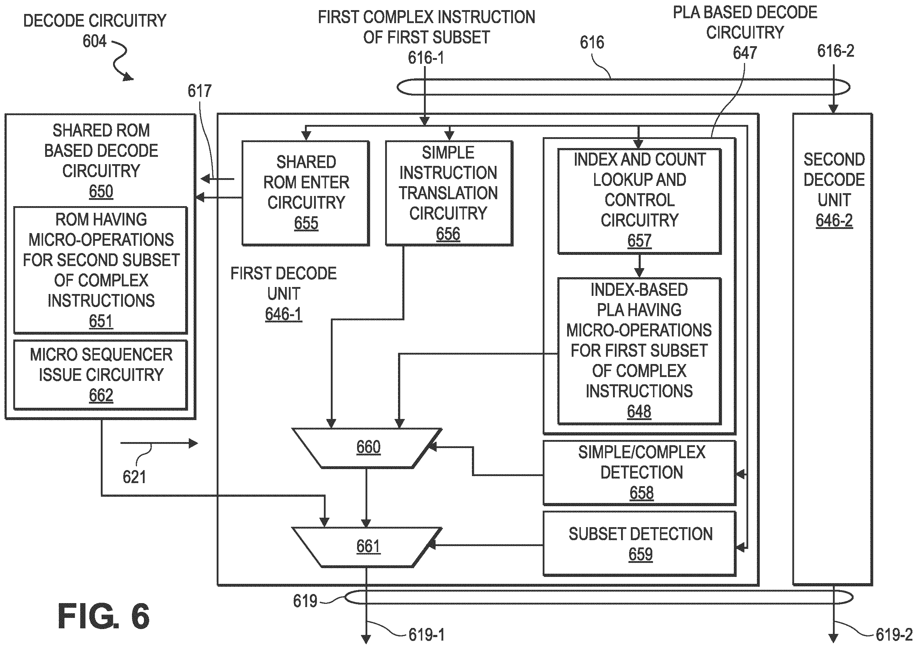

**FIG. 6** is a block diagram of a second detailed example embodiment of decode circuitry 604. In some embodiments, the decode circuity 604 may be used as the decode circuitry 104 in the processor of **FIG. 1** and/or as the decode circuitry 204 in the processor of **FIG. 2** and/or as the decode circuitry 504 in the processor of **FIG. 5****.**

The decode circuitry includes a first decode unit 646-1, a second decode unit 646-2, optionally other decode units, a shared ROM based decode circuitry 650, and first PLA based decode circuitry 647. These components may optionally be similar to or the same as the correspondingly named components already described for **FIG. 5** (e.g., have any one or more previously described characteristics). To avoid obscuring the description, the different and/or additional characteristics of the decode circuitry 604 of **FIG. 6** will primarily be described, without repeating all the characteristics which may optionally be similar to or the same as what has already been described for the decode circuitry of **FIG. 5****.**

The first decode unit 646-1 and the second decode unit 646-2 may concurrently receive at least two complex instructions 616 of a first subset of complex instructions. Specifically, the first decode unit may receive a first complex instruction 616-1 of the first subset and the second decode unit may receive a second complex instruction 616-2 of the first subset. The first and second decode units may concurrently decode these complex instructions and may concurrently output at least two corresponding decoded instructions 619. Specifically, the first decode unit may output a first decoded instruction 619-1 and the second decode unit may concurrently output a second decoded instruction 619-2.

In the illustration, the instruction input to the first decode unit 646-1 is the first complex instruction 616-1 of the first subset. However, more generally the input instruction to the first decode unit may be any one of three different types of instructions, namely a simple instruction, a complex instruction of the first subset, or a complex instruction of the second subset.

The first decode unit includes shared ROM based decode circuitry enter circuitry 655 that is operative or able to enter the shared ROM based decode circuitry when the received instruction is the complex instruction of the second subset. As shown in this example, a third complex instruction 617 of the second subset may be provided to the shared ROM based decode circuitry. The shared ROM based decode circuitry includes a ROM 651 having decoded instructions used to implement each of the complex instructions of the second subset and a micro sequencer issue circuitry 662. The shared ROM based decode circuitry may concurrently decode the third complex instruction and concurrently output a decoded instruction 621. By way of example, the shared ROM based decode circuitry may be a microcode ROM, a ROM based micro-sequencer, or the like.

The first decode unit includes simple instruction translation circuitry 656 to decode the input instruction into a single decoded instruction when the input instruction is a simple instruction. The first decode unit includes the PLA based decode circuitry 647 to decode the input instruction when the input instruction is the complex instruction of the first subset.

The first decode unit includes circuitry to determine which of the three different types of instructions the input instruction is and to select appropriate decoded instructions to be output. Specifically, the first decode unit includes a simple instruction versus complex (simple/complex) instruction detection circuitry 658, a first subset of complex instructions versus second subset of complex instructions detection circuitry 659, a first multiplexer or other selection circuitry 660, and a second multiplexer or other selection circuitry 661. The instructions input to the first decode unit are each provided to each of the simple instruction translation circuitry 656, the PLA based decode circuitry 647, the simple instruction versus complex instruction detection circuitry 658, and the first subset of complex instructions versus second subset of complex instructions detection circuitry 659.

The simple instruction versus complex instruction detection circuitry 658 will determine whether the input instruction is a simple instruction or a complex instruction and will provide a signal reflecting this determination as a control to the first selection circuitry 660. If the signal indicates the input instruction is the simple instruction, then the first selection circuitry 660will be controlled to select a decoded instruction output from the simple instruction translation circuitry 656 and provided as a first of two inputs to the first selection circuitry 660. Alternatively, if the signal indicates the input instruction is the complex instruction, then the first selection circuitry 660 will be controlled to select a decoded instruction output from the PLA based decode circuitry and provided as a second of two inputs to the first selection circuitry 660.

The first subset of complex instructions versus second subset of complex instructions detection circuitry 659 will determine whether the input instruction is a complex instruction of the first subset or a complex instruction of the second subset and will provide a signal reflecting this determination as a control to the second selection circuitry 661. If the signal indicates the input instruction is of the second subset, then the second selection circuitry 661will be controlled to select a decoded instruction output from the shared ROM based decode circuitry 650 and provided as a first of two inputs to the second selection circuitry 661. Alternatively, if the signal indicates the input instruction is of the first subset, then the second selection circuitry 661will be controlled to select a decoded instruction output from the first selection circuitry 660. The decoded instruction selected by the second selection circuitry is the decoded instruction to be output from the first decode unit (e.g., the decoded instruction 619-1).

The PLA based decode circuitry 647 is used to decode complex instructions of the first subset (e.g., the first complex instruction 616-1). The PLA based decode circuitry includes an index and count lookup and control circuitry 657. The index and count lookup and control circuitry may receive the input complex instruction of the first subset and lookup and index and a count for the complex instruction. The index may represent a value that selects, identifies, or indicates a first microoperation or other decoded instruction used to implement the complex instruction in an index based PLA 648 having microoperations or other decoded instructions to implement each of the instructions of the first subset. The count may represent a value (e.g., a fixed or predetermined value) indicative of a total number of microoperations or other decoded instructions used to implement the complex instruction of the first subset which may be known in advance based on the complex instruction (e.g., its opcode). By way of example, the index and count lookup and control circuitry may include a structure (e.g., a hardware implemented table or other data structure) that maps each complex instruction of the first subset (e.g., its opcode) to a corresponding index and count.

The index and count lookup and control circuitry may output the index to the index based PLA 648. The index may select, identify, or indicate a first microoperation or other decoded instruction, which may be output from the index based PLA to the first selection circuitry 660. The index and count lookup and control circuitry 657 may then increment, decrement, or otherwise adjust the index so that the adjusted index identifies or indicates a next microoperation or other decoded instruction to be used to implement the complex instruction. By way of example, a finite state machine (FSM) may be programmed with the index and may be used to adjust the index. That adjusted index may be output to the index based PLA 648 to select the next decoded instruction to be sent to the first selection circuit 660. For complex instructions having no control flow transfers, this process may be repeated for as many decoded instructions as needed to implement the complex instruction. For example, the indexes may be simply either incremented or decremented sequentially for all the decoded instructions used to implement the instruction. For complex instructions having control flow transfers (e.g., repetitive control flow transfers), other adjustments may be made to the index, as will be discussed further below. When the adjusted index reaches or equals the count, the PLA based decode circuitry 647 may be done decoding the complex instruction. A microarchitectural register may be used to store the count and comparison circuitry may be included to compare the adjusted index with the count. The first decode unit may then start decoding a different instruction.

One potential drawback to the shared ROM based decode circuitry is that there can be significant entry penalties to enter the shared ROM based decode circuitry and significant exit penalties to exit from the shared ROM based decode circuitry. The entry penalty may include the penalty of deciding to enter the shared ROM based decode circuitry, of deciding where in the shared ROM based decode circuitry to enter and starting to issue decoded instructions from that entry point. Also, the complex instructions of the second subset may be implemented with decoded instructions with potentially complex control flow transfers and varying numbers including potentially very large numbers of decoded instructions. For these reasons, it is often not readily predictable or known in advance when the final decoded instruction used to implement a complex instruction of the second subset will be reached. This generally results in an exit penalty between the clock cycle you know you have the final decoded instruction and the time of transitioning back to a decode unit to start decoding another instruction. By way of example, the shared ROM based decode circuitry may have an entrance penalty of at least two clock cycles and an exit penalty of at least one clock cycle between outputting a final instruction for a complex instruction and outputting a decoded instruction for a next simple instruction decoded.

In some embodiments, as compared to the shared ROM based decode circuitry, the PLA based decode circuitry may have no or at least less enter penalty in clock cycles and/or no or at least less exit penalty in clock cycles. Due in part to the use of a PLA instead of a ROM, due in part to implementing simpler and/or shorter instructions with the PLA than the ROM, and due in part to the index, the entry penalty for the PLA based decode circuitry may be zero or at least less than that of the ROM based decode circuitry. For example, when the first decode unit decodes a simple instruction into a decoded instruction outputs the decoded instruction on a clock cycle, the first decode unit may decode a complex instruction of the first subset and output a first decoded instruction decoded from the complex instruction of the first subset on a clock cycle immediately after the clock cycle.

The count may be a predetermined or fixed value that is known upon recognizing the complex instruction (e.g., its opcode) and/or before the time the first decoded instruction is output for the complex instruction. The count provides a way for the first decode unit to know how many issue slots will be taken up by decoded instructions used to implement the complex instruction and monitor or predict when the decoding of the complex instruction will end and the decoding of another instruction may begin (e.g., to predict or determine a clock cycle to transition back to decoding a next instruction). This may avoid or at least decrease pipeline bubbles and achieve better performance. In some cases, when the complex instruction of the first subset is implemented with at least three or four decoded instructions there may be limited or no clock cycles of exit penalty. For example, when a complex instruction of the first subset is decoded into at least four or five decoded instructions, the first decode unit may output a final decoded instruction of the at least four or five decoded instructions on a clock cycle and the first decode unit may output a decoded instruction decoded from another instruction on a clock cycle immediately after the clock cycle.

In some embodiments, the adjusted index may be used to support reentry into complex instructions of the first subset in the case of hardware assists. More complex instructions (e.g., those implemented with more decoded instructions) may have decoded instructions that may take hardware assists in execution or memory units. An example of such a hardware assist is a memory ordering nuke. Such hardware assists may involve the processor discarding all speculative decoded instructions younger than the assisting operation, and then restart decode and execution from that operation. In other words, the restart may happen at an intermediate point within the decoded instructions used to implement the complex instruction, rather than restarting from the very first decoded instruction used to implement the complex instruction. The complex instruction (e.g., its opcode) may not be available at the time of the hardware assist. Also, it may be incorrect to fetch and decode the complex instruction again. In some embodiments, the adjusted index may be used to restart the complex instruction at the intermediate point at the specific decoded instruction younger than the hardware assist. In some embodiments, the index may be unique to the particular complex instruction so it may be possible to use the adjusted index to lookup up the appropriate decoded instruction in the PLA and select the decoded instruction to output.

In some embodiments, the PLA 648 may optionally be configured for efficient storage of decoded instructions for certain complex instructions (e.g., gather instructions). In some embodiments, the decoded instructions for these complex instructions may be divided into three sections: (1) a preamble to prepare for the decoded instructions that follow and that is common across different flavors of the complex instruction; (2) a body including a repeated set of decoded instructions where the number of iterations may be different depending on the different flavors of the complex instruction; and (3) one or more different post-ambles associated with outputting a result of the complex instruction. In some embodiments, the PLA may optionally be set up or configured so the preambles combine (e.g., minimize) together, the bodies combine (e.g., minimize) together, and the post-ambles combine (e.g., minimize) together. Even if each different flavor of the complex instruction has a different preamble and thus a different starting index; by careful choice of the starting index, a significant number of the logic gates in the PLA for the different preamble decoded instructions may minimize. Similarly, the main body of the decoded instructions may optionally be adjusted to use the same number of decoded instructions as the decode width; again, collapsing all the copies into the same minimized PLA entries. This may make the total number of decoded instructions stored in the PLA much smaller which may help to reduce the size of the PLA. Conversely, if the decoded instructions for such an instruction were encoded in ROM 651, there tends to be more duplication across different flavors of the complex instruction and/or control flow to jump in and out of common code sections.

In some embodiments, the PLA based decode circuitry may optionally include a counter (e.g., a loop counter) to be used as an input to the PLA 648 along with the index to implement certain complex instructions. For example, this may be useful when the number of decoded instructions used to implement a complex instruction is not only dependent upon the count determined by initial lookup of the complex instruction by the index and count lookup and control circuit 657. In some cases, the first subset may include complex instructions like repeat string instructions where the number of repetitions is variable (e.g., dependent on a value in a source register of the instruction). The PLA based decode circuitry may include a state machine or other control to adjust (e.g., increment or decrement) the counter and may include circuitry to detect if the counter overflows. The PLA based decode circuitry may support a mode or other configuration in which the counter is used as another input to the PLA. In some embodiments, the PLA may only store one copy of a set of decoded instructions used to implement a loop iteration for a complex instruction. The PLA may repeatedly output the same set of decoded instructions each time the counter is adjusted (e.g., incremented or decremented). The termination condition for the counter may be a trigger for the PLA to exit the mode and revert to the mode or configuration where it produces a unique decoded instruction per index. This may allow the PLA to transition back to the post-amble for such variable length operations and finish the complex instruction.

### Example Computer Architectures.

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are suitable.

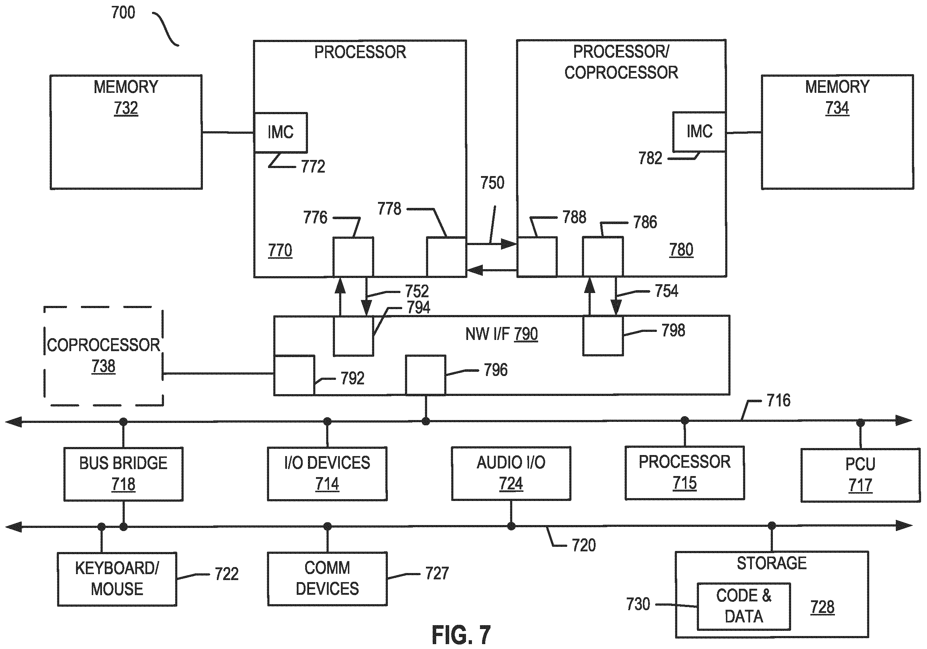

**FIG. 7** illustrates an example computing system. Multiprocessor system 700 is an interfaced system and includes a plurality of processors or cores including a first processor 770 and a second processor 780 coupled via an interface 750 such as a point-to-point (P-P) interconnect, a fabric, and/or bus. In some examples, the first processor 770 and the second processor 780 are homogeneous. In some examples, the first processor 770 and the second processor 780 are heterogenous. Though the example system 700 is shown to have two processors, the system may have three or more processors, or may be a single processor system. In some examples, the computing system is a system on a chip (SoC).

Processors 770 and 780 are shown including integrated memory controller (IMC) circuitry 772 and 782, respectively. Processor 770 also includes interface circuits 776 and 778; similarly, second processor 780 includes interface circuits 786 and 788. Processors 770, 780 may exchange information via the interface 750 using interface circuits 778, 788. IMCs 772 and 782 couple the processors 770, 780 to respective memories, namely a memory 732 and a memory 734, which may be portions of main memory locally attached to the respective processors.

Processors 770, 780 may each exchange information with a network interface (NW I/F) 790 via individual interfaces 752, 754 using interface circuits 776, 794, 786, 798. The network interface 790 (e.g., one or more of an interconnect, bus, and/or fabric, and in some examples is a chipset) may optionally exchange information with a coprocessor 738 via an interface circuit 792. In some examples, the coprocessor 738 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 770, 780 or outside of both processors, yet connected with the processors via an interface such as P-P interconnect, such that either or both processors' local cache information may be stored in the shared cache if a processor is placed into a low power mode.

Network interface 790 may be coupled to a first interface 716 via interface circuit 796. In some examples, the first interface 716 may be an interface such as a Peripheral Component Interconnect (PCI) interconnect, a PCI Express interconnect or another I/O interconnect. In some examples, the first interface 716 is coupled to a power control unit (PCU) 717, which may include circuitry, software, and/or firmware to perform power management operations regarding the processors 770, 780 and/or co-processor 738. PCU 717 provides control information to a voltage regulator (not shown) to cause the voltage regulator to generate the appropriate regulated voltage. PCU 717 also provides control information to control the operating voltage generated. In various examples, PCU 717 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 717 is illustrated as being present as logic separate from the processor 770 and/or processor 780. In other cases, PCU 717 may execute on a given one or more of cores (not shown) of processor 770 or 780. In some cases, PCU 717 may be implemented as a microcontroller (dedicated or general-purpose) or other control logic configured to execute its own dedicated power management code, sometimes referred to as P-code. In yet other examples, power management operations to be performed by PCU 717 may be implemented externally to a processor, such as by way of a separate power management integrated circuit (PMIC) or another component external to the processor. In yet other examples, power management operations to be performed by PCU 717 may be implemented within BIOS or other system software.

Various I/O devices 714 may be coupled to first interface 716, along with a bus bridge 718 which couples first interface 716 to a second interface 720. In some examples, one or more additional processor(s) 715, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 716. In some examples, the second interface 720 may be a low pin count (LPC) interface. Various devices may be coupled to the second interface 720 including, for example, a keyboard and/or mouse 722, communication devices 727 and storage circuitry 728. Storage circuitry 728 may be one or more non-transitory machine-readable storage media as described below, such as a disk drive or other mass storage device which may include instructions/code and data 730 and may implement the storage 'ISAB03 in some examples. Further, an audio I/O 724 may be coupled to second interface 720. Note that other architectures than the point-to-point architecture described above are possible. For example, instead of the point-to-point architecture, a system such as multiprocessor system 700 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

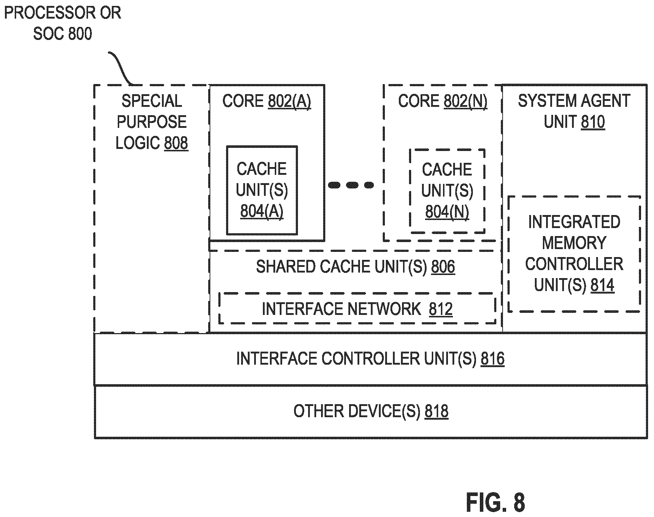

**FIG. 8** illustrates a block diagram of an example processor and/or SoC 800 that may have one or more cores and an integrated memory controller. The solid lined boxes illustrate a processor 800 with a single core 802(A), system agent unit circuitry 810, and a set of one or more interface controller unit(s) circuitry 816, while the optional addition of the dashed lined boxes illustrates an alternative processor 800 with multiple cores 802(A)-(N), a set of one or more integrated memory controller unit(s) circuitry 814 in the system agent unit circuitry 810, and special purpose logic 808, as well as a set of one or more interface controller units circuitry 816. Note that the processor 800 may be one of the processors 770 or 780, or co-processor 738 or 715 of **FIG. 7****.**

Thus, different implementations of the processor 800 may include: 1) a CPU with the special purpose logic 808 being integrated graphics and/or scientific (throughput) logic (which may include one or more cores, not shown), and the cores 802(A)-(N) being one or more general purpose cores (e.g., general purpose in-order cores, general purpose out-of-order cores, or a combination of the two); 2) a coprocessor with the cores 802(A)-(N) being a large number of special purpose cores intended primarily for graphics and/or scientific (throughput); and 3) a coprocessor with the cores 802(A)-(N) being a large number of general purpose in-order cores. Thus, the processor 800 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 800 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 804(A)-(N) within the cores 802(A)-(N), a set of one or more shared cache unit(s) circuitry 806, and external memory (not shown) coupled to the set of integrated memory controller unit(s) circuitry 814. The set of one or more shared cache unit(s) circuitry 806 may include one or more mid-level caches, such as level 2 (L2), level 3 (L3), level 4 (L4), or other levels of cache, such as a last level cache (LLC), and/or combinations thereof. While in some examples interface network circuitry 812 (e.g., a ring interconnect) interfaces the special purpose logic 808 (e.g., integrated graphics logic), the set of shared cache unit(s) circuitry 806, and the system agent unit circuitry 810, alternative examples use any number of well-known techniques for interfacing such units. In some examples, coherency is maintained between one or more of the shared cache unit(s) circuitry 806 and cores 802(A)-(N). In some examples, interface controller units circuitry 816 couple the cores 802 to one or more other devices 818 such as one or more I/O devices, storage, one or more communication devices (e.g., wireless networking, wired networking, etc.), etc.

In some examples, one or more of the cores 802(A)-(N) are capable of multi-threading. The system agent unit circuitry 810 includes those components coordinating and operating cores 802(A)-(N). The system agent unit circuitry 810 may include, for example, power control unit (PCU) circuitry and/or display unit circuitry (not shown). The PCU may be or may include logic and components needed for regulating the power state of the cores 802(A)-(N) and/or the special purpose logic 808 (e.g., integrated graphics logic). The display unit circuitry is for driving one or more externally connected displays.

The cores 802(A)-(N) may be homogenous in terms of instruction set architecture (ISA). Alternatively, the cores 802(A)-(N) may be heterogeneous in terms of ISA; that is, a subset of the cores 802(A)-(N) may be capable of executing an ISA, while other cores may be capable of executing only a subset of that ISA or another ISA.

### Example Core Architectures - In-order and out-of-order core block diagram.

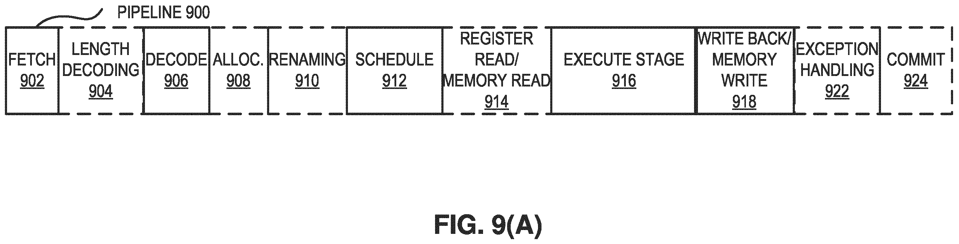

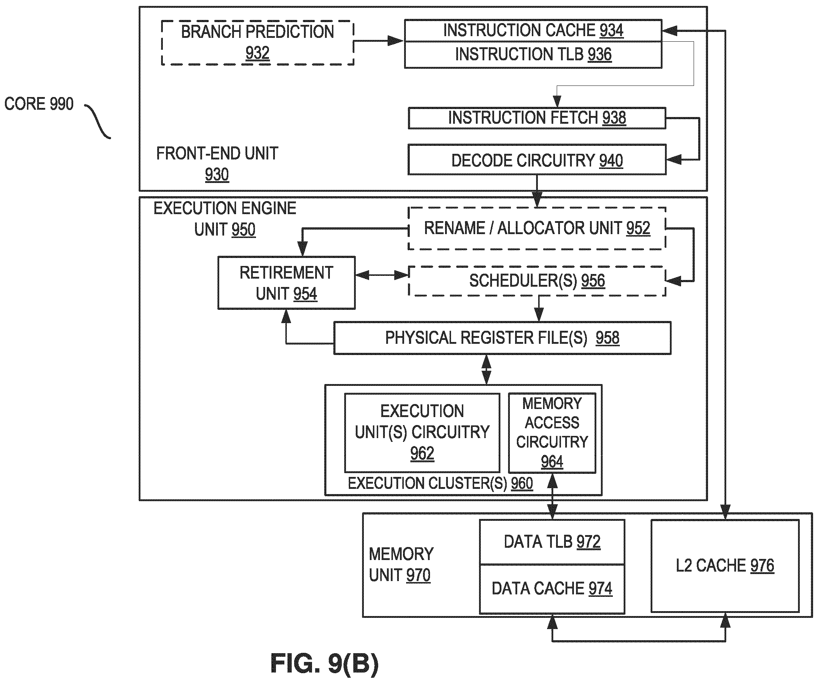

**FIG. 9(A)** is a block diagram illustrating both an example in-order pipeline and an example register renaming, out-of-order issue/execution pipeline according to examples. **FIG. 9(B)** is a block diagram illustrating both an example in-order architecture core and an example register renaming, out-of-order issue/execution architecture core to be included in a processor according to examples. The solid lined boxes in FIGS. 9(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **FIG. 9(A)****,** a processor pipeline 900 includes a fetch stage 902, an optional length decoding stage 904, a decode stage 906, an optional allocation (Alloc) stage 908, an optional renaming stage 910, a schedule (also known as a dispatch or issue) stage 912, an optional register read/memory read stage 914, an execute stage 916, a write back/memory write stage 918, an optional exception handling stage 922, and an optional commit stage 924. One or more operations can be performed in each of these processor pipeline stages. For example, during the fetch stage 902, one or more instructions are fetched from instruction memory, and during the decode stage 906, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 906 and the register read/memory read stage 914 may be combined into one pipeline stage. In one example, during the execute stage 916, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of **FIG. 9(B)** may implement the pipeline 900 as follows: 1) the instruction fetch circuitry 938 performs the fetch and length decoding stages 902 and 904; 2) the decode circuitry 940 performs the decode stage 906; 3) the rename/allocator unit circuitry 952 performs the allocation stage 908 and renaming stage 910; 4) the scheduler(s) circuitry 956 performs the schedule stage 912; 5) the physical register file(s) circuitry 958 and the memory unit circuitry 970 perform the register read/memory read stage 914; the execution cluster(s) 960 perform the execute stage 916; 6) the memory unit circuitry 970 and the physical register file(s) circuitry 958 perform the write back/memory write stage 918; 7) various circuitry may be involved in the exception handling stage 922; and 8) the retirement unit circuitry 954 and the physical register file(s) circuitry 958 perform the commit stage 924.

**FIG. 9(B)** shows a processor core 990 including front-end unit circuitry 930 coupled to execution engine unit circuitry 950, and both are coupled to memory unit circuitry 970. The core 990 may be a reduced instruction set architecture computing (RISC) core, a complex instruction set architecture computing (CISC) core, a very long instruction word (VLIW) core, or a hybrid or alternative core type. As yet another option, the core 990 may be a special-purpose core, such as, for example, a network or communication core, compression engine, coprocessor core, general purpose computing graphics processing unit (GPGPU) core, graphics core, or the like.

The front-end unit circuitry 930 may include branch prediction circuitry 932 coupled to instruction cache circuitry 934, which is coupled to an instruction translation lookaside buffer (TLB) 936, which is coupled to instruction fetch circuitry 938, which is coupled to decode circuitry 940. In one example, the instruction cache circuitry 934 is included in the memory unit circuitry 970 rather than the front-end circuitry 930. The decode circuitry 940 (or decoder) may decode instructions, and generate as an output one or more microoperations, micro-code entry points, microinstructions, other instructions, or other control signals, which are decoded from, or which otherwise reflect, or are derived from, the original instructions. The decode circuitry 940 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 940 may be implemented using various different mechanisms. Examples of suitable mechanisms include, but are not limited to, look-up tables, hardware implementations, programmable logic arrays (PLAs), microcode read only memories (ROMs), etc. In one example, the core 990 includes a microcode ROM (not shown) or other medium that stores microcode for certain macroinstructions (e.g., in decode circuitry 940 or otherwise within the front-end circuitry 930). In one example, the decode circuitry 940 includes a microoperation (micro-op) or operation cache (not shown) to hold/cache decoded operations, micro-tags, or microoperations generated during the decode or other stages of the processor pipeline 900. The decode circuitry 940 may be coupled to rename/allocator unit circuitry 952 in the execution engine circuitry 950.

The execution engine circuitry 950 includes the rename/allocator unit circuitry 952 coupled to retirement unit circuitry 954 and a set of one or more scheduler(s) circuitry 956. The scheduler(s) circuitry 956 represents any number of different schedulers, including reservations stations, central instruction window, etc. In some examples, the scheduler(s) circuitry 956 can include arithmetic logic unit (ALU) scheduler/scheduling circuitry, ALU queues, address generation unit (AGU) scheduler/scheduling circuitry, AGU queues, etc. The scheduler(s) circuitry 956 is coupled to the physical register file(s) circuitry 958. Each of the physical register file(s) circuitry 958 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 958 includes vector registers unit circuitry, writemask registers unit circuitry, and scalar register unit circuitry. These register units may provide architectural vector registers, vector mask registers, general-purpose registers, etc. The physical register file(s) circuitry 958 is coupled to the retirement unit circuitry 954 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 954 and the physical register file(s) circuitry 958 are coupled to the execution cluster(s) 960. The execution cluster(s) 960 includes a set of one or more execution unit(s) circuitry 962 and a set of one or more memory access circuitry 964. The execution unit(s) circuitry 962 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 956, physical register file(s) circuitry 958, and execution cluster(s) 960 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 964). It should also be understood that where separate pipelines are used, one or more of these pipelines may be out-of-order issue/execution and the rest in-order.

In some examples, the execution engine unit circuitry 950 may perform load store unit (LSU) address/data pipelining to an Advanced Microcontroller Bus (AMB) interface (not shown), and address phase and writeback, data phase load, store, and branches.

The set of memory access circuitry 964 is coupled to the memory unit circuitry 970, which includes data TLB circuitry 972 coupled to data cache circuitry 974 coupled to level 2 (L2) cache circuitry 976. In one example, the memory access circuitry 964 may include load unit circuitry, store address unit circuitry, and store data unit circuitry, each of which is coupled to the data TLB circuitry 972 in the memory unit circuitry 970. The instruction cache circuitry 934 is further coupled to the level 2 (L2) cache circuitry 976 in the memory unit circuitry 970. In one example, the instruction cache 934 and the data cache 974 are combined into a single instruction and data cache (not shown) in L2 cache circuitry 976, level 3 (L3) cache circuitry (not shown), and/or main memory. The L2 cache circuitry 976 is coupled to one or more other levels of cache and eventually to a main memory.

The core 990 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 990 includes logic to support a packed data instruction set architecture extension (e.g., AVX1, AVX2), thereby allowing the operations used by many multimedia applications to be performed using packed data.

### Example Execution Unit(s) Circuitry.

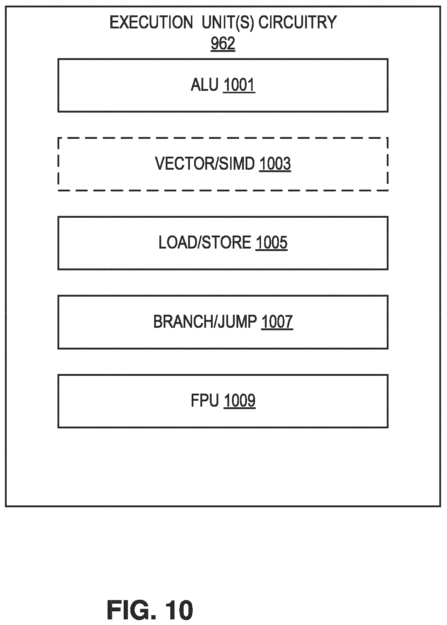

**FIG. 10** illustrates examples of execution unit(s) circuitry, such as execution unit(s) circuitry 962 of **FIG. 9(B)****.** As illustrated, execution unit(s) circuity 962 may include one or more ALU circuits 1001, optional vector/single instruction multiple data (SIMD) circuits 1003, load/store circuits 1005, branch/jump circuits 1007, and/or Floating-point unit (FPU) circuits 1009. ALU circuits 1001 perform integer arithmetic and/or Boolean operations. Vector/SIMD circuits 1003 perform vector/SIMD operations on packed data (such as SIMD/vector registers). Load/store circuits 1005 execute load and store instructions to load data from memory into registers or store from registers to memory. Load/store circuits 1005 may also generate addresses. Branch/jump circuits 1007 cause a branch or jump to a memory address depending on the instruction. FPU circuits 1009 perform floating-point arithmetic. The width of the execution unit(s) circuitry 962 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Example Register Architecture.

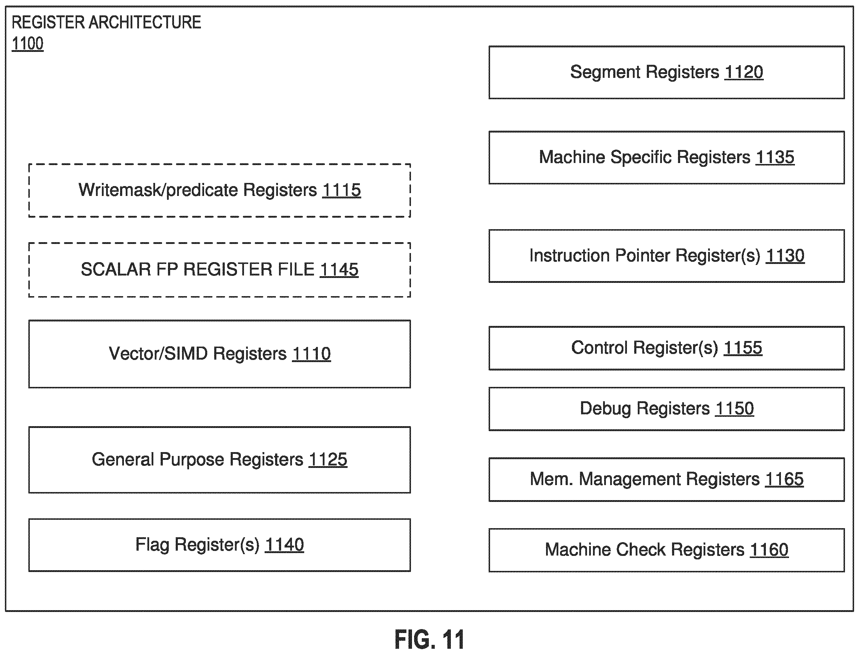

**FIG. 11** is a block diagram of a register architecture 1100 according to some examples. As illustrated, the register architecture 1100 includes vector/SIMD registers 1110 that vary from 128-bit to 1,024 bits width. In some examples, the vector/SIMD registers 1110 are physically 512-bits and, depending upon the mapping, only some of the lower bits are used. For example, in some examples, the vector/SIMD registers 1110 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 1100 includes writemask/predicate registers 1115. For example, in some examples, there are 8 writemask/predicate registers (sometimes called k0 through k7) that are each 16-bit, 32-bit, 64-bit, or 128-bit in size. Writemask/predicate registers 1115 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 1115 corresponds to a data element position of the destination. In other examples, the writemask/predicate registers 1115 are scalable and consists of a set number of enable bits for a given vector element (e.g., 8 enable bits per 64-bit vector element).

The register architecture 1100 includes a plurality of general-purpose registers 1125. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 1100 includes scalar floating-point (FP) register file 1145 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 1140 (e.g., EFLAGS, RFLAGS, etc.) store status and control information for arithmetic, compare, and system operations. For example, the one or more flag registers 1140 may store condition code information such as carry, parity, auxiliary carry, zero, sign, and overflow. In some examples, the one or more flag registers 1140 are called program status and control registers.

Segment registers 1120 contain segment points for use in accessing memory. In some examples, these registers are referenced by the names CS, DS, SS, ES, FS, and GS.

Machine specific registers (MSRs) 1135 control and report on processor performance. Most MSRs 1135 handle system-related functions and are not accessible to an application program. Machine check registers 1160 consist of control, status, and error reporting MSRs that are used to detect and report on hardware errors.

One or more instruction pointer register(s) 1130 store an instruction pointer value. Control register(s) 1155 (e.g., CR0-CR4) determine the operating mode of a processor (e.g., processor 770, 780, 738, 715, and/or 800) and the characteristics of a currently executing task. Debug registers 1150 control and allow for the monitoring of a processor or core's debugging operations.

Memory (mem) management registers 1165 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 1100 may, for example, be used in register file / memory 'ISAB08, or physical register file(s) circuitry 9 58.

### Instruction set architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

### Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

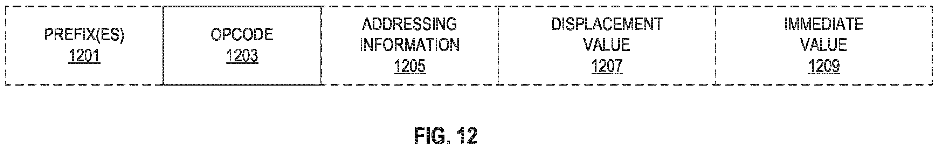

**FIG. 12** illustrates examples of an instruction format. As illustrated, an instruction may include multiple components including, but not limited to, one or more fields for: one or more prefixes 1201, an opcode 1203, addressing information 1205 (e.g., register identifiers, memory addressing information, etc.), a displacement value 1207, and/or an immediate value 1209. Note that some instructions utilize some or all the fields of the format whereas others may only use the field for the opcode 1203. In some examples, the order illustrated is the order in which these fields are to be encoded, however, it should be appreciated that in other examples these fields may be encoded in a different order, combined, etc.

The prefix(es) field(s) 1201, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 1203 is used to at least partially define the operation to be performed upon a decoding of the instruction. In some examples, a primary opcode encoded in the opcode field 1203 is one, two, or three bytes in length. In other examples, a primary opcode can be a different length. An additional 3-bit opcode field is sometimes encoded in another field.

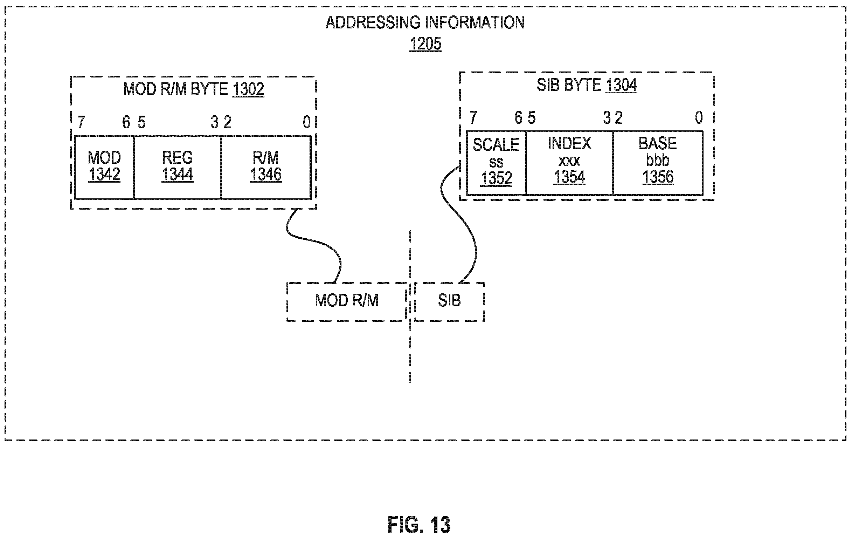

The addressing information field 1205 is used to address one or more operands of the instruction, such as a location in memory or one or more registers. **FIG. 13** illustrates examples of the addressing information field 1205. In this illustration, an optional MOD R/M byte 1302 and an optional Scale, Index, Base (SIB) byte 1304 are shown. The MOD R/M byte 1302 and the SIB byte 1304 are used to encode up to two operands of an instruction, each of which is a direct register or effective memory address. Note that both fields are optional in that not all instructions include one or more of these fields. The MOD R/M byte 1302 includes a MOD field 1342, a register (reg) field 1344, and R/M field 1346.

The content of the MOD field 1342 distinguishes between memory access and non-memory access modes. In some examples, when the MOD field 1342 has a binary value of 11 (11b), a register-direct addressing mode is utilized, and otherwise a register-indirect addressing mode is used.

The register field 1344 may encode either the destination register operand or a source register operand or may encode an opcode extension and not be used to encode any instruction operand. The content of register field 1344, directly or through address generation, specifies the locations of a source or destination operand (either in a register or in memory). In some examples, the register field 1344 is supplemented with an additional bit from a prefix (e.g., prefix 1201) to allow for greater addressing.

The R/M field 1346 may be used to encode an instruction operand that references a memory address or may be used to encode either the destination register operand or a source register operand. Note the R/M field 1346 may be combined with the MOD field 1342 to dictate an addressing mode in some examples.

The SIB byte 1304 includes a scale field 1352, an index field 1354, and a base field 1356 to be used in the generation of an address. The scale field 1352 indicates a scaling factor. The index field 1354 specifies an index register to use. In some examples, the index field 1354 is supplemented with an additional bit from a prefix (e.g., prefix 1201) to allow for greater addressing. The base field 1356 specifies a base register to use. In some examples, the base field 1356 is supplemented with an additional bit from a prefix (e.g., prefix 1201) to allow for greater addressing. In practice, the content of the scale field 1352 allows for the scaling of the content of the index field 1354 for memory address generation (e.g., for address generation that uses 2^{scale} * index + base).

Some addressing forms utilize a displacement value to generate a memory address. For example, a memory address may be generated according to 2^{scale} * index + base + displacement, index*scale + displacement, r/m + displacement, instruction pointer (RIP/EIP) + displacement, register + displacement, etc. The displacement may be a 1-byte, 2-byte, 4-byte, etc. value. In some examples, the displacement field 1207 provides this value. Additionally, in some examples, a displacement factor usage is encoded in the MOD field of the addressing information field 1205 that indicates a compressed displacement scheme for which a displacement value is calculated and stored in the displacement field 1207.

In some examples, the immediate value field 1209 specifies an immediate value for the instruction. An immediate value may be encoded as a 1-byte value, a 2-byte value, a 4-byte value, etc.

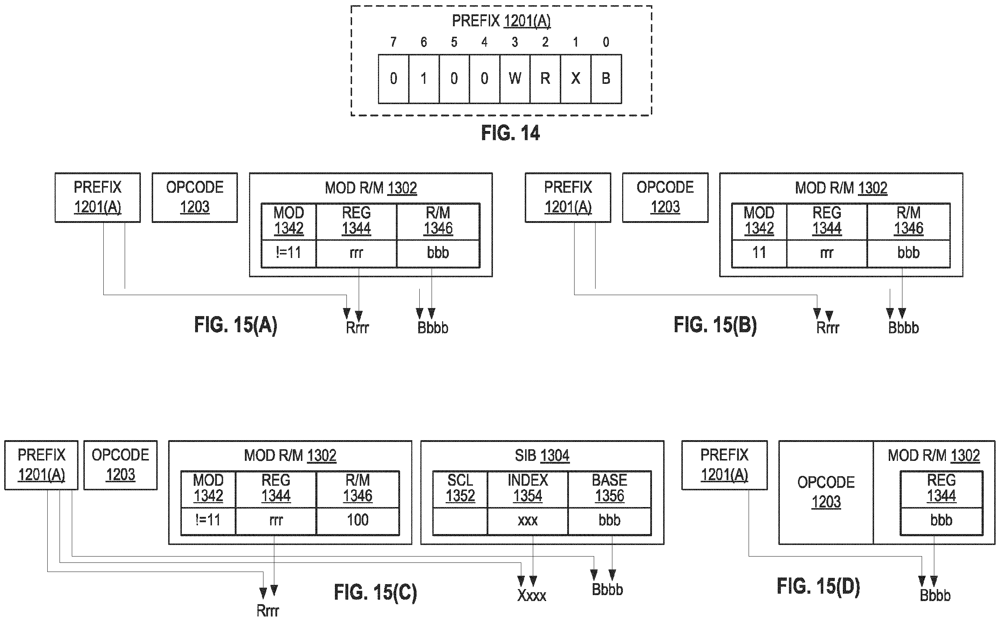

**FIG. 14** illustrates examples of a first prefix 1201(A). In some examples, the first prefix 1201(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 1201(A) may specify up to three registers using 3-bit fields depending on the format: 1) using the reg field 1344 and the R/M field 1346 of the MOD R/M byte 1302; 2) using the MOD R/M byte 1302 with the SIB byte 1304 including using the reg field 1344 and the base field 1356 and index field 1354; or 3) using the register field of an opcode.

In the first prefix 1201(A), bit positions 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 1344 and MOD R/M R/M field 1346 alone can each only address 8 registers.

In the first prefix 1201(A), bit position 2 (R) may be an extension of the MOD R/M reg field 1344 and may be used to modify the MOD R/M reg field 1344 when that field encodes a general-purpose register, a 64-bit packed data register (e.g., a SSE register), or a control or debug register. R is ignored when MOD R/M byte 1302 specifies other registers or defines an extended opcode.

### Bit position 1 (X) may modify the SIB byte index field 1354.

Bit position 0 (B) may modify the base in the MOD R/M R/M field 1346 or the SIB byte base field 1356; or it may modify the opcode register field used for accessing general purpose registers (e.g., general purpose registers 1125).

FIGS. 15(A)-(D) illustrate examples of how the R, X, and B fields of the first prefix 1201(A) are used. **FIG. 15(A)** illustrates R and B from the first prefix 1201(A) being used to extend the reg field 1344 and R/M field 1346 of the MOD R/M byte 1302 when the SIB byte 13 04 is not used for memory addressing. **FIG. 15(B)** illustrates R and B from the first prefix 1201(A) being used to extend the reg field 1344 and R/M field 1346 of the MOD R/M byte 1302 when the SIB byte 13 04 is not used (register-register addressing). **FIG. 15(C)** illustrates R, X, and B from the first prefix 1201(A) being used to extend the reg field 1344 of the MOD R/M byte 1302 and the index field 1354 and base field 1356 when the SIB byte 13 04 being used for memory addressing. **FIG. 15(D)** illustrates B from the first prefix 1201(A) being used to extend the reg field 1344 of the MOD R/M byte 1302 when a register is encoded in the opcode 1203.

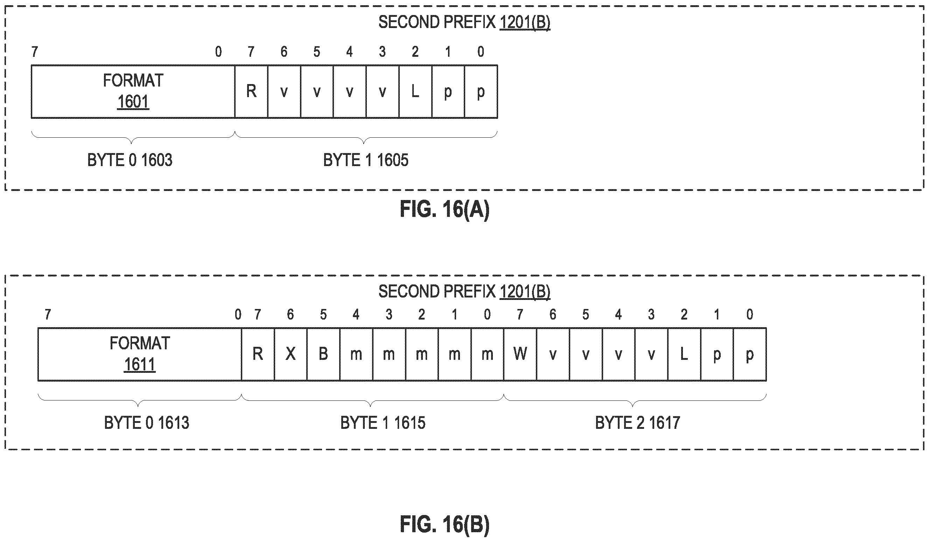

FIGS. 16(A)-(B) illustrate examples of a second prefix 1201(B). In some examples, the second prefix 1201(B) is an example of a VEX prefix. The second prefix 1201(B) encoding allows instructions to have more than two operands, and allows SIMD vector registers (e.g., vector/SIMD registers 1110) to be longer than 64-bits (e.g., 128-bit and 256-bit). The use of the second prefix 1201(B) provides for three-operand (or more) syntax. For example, previous two-operand instructions performed operations such as A = A + B, which overwrites a source operand. The use of the second prefix 1201(B) enables operands to perform nondestructive operations such as A = B + C.

In some examples, the second prefix 1201(B) comes in two forms - a two-byte form and a three-byte form. The two-byte second prefix 1201(B) is used mainly for 128-bit, scalar, and some 256-bit instructions; while the three-byte second prefix 1201(B) provides a compact replacement of the first prefix 1201(A) and 3-byte opcode instructions.

**FIG. 16(A)** illustrates examples of a two-byte form of the second prefix 1201(B). In one example, a format field 1601 (byte 0 1603) contains the value C5H. In one example, byte 1 1605 includes an "R" value in bit[7]. This value is the complement of the "R" value of the first prefix 1201(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1346 to encode the instruction operand that references a memory address or encode either the destination register operand or a source register operand.

Instructions that use this prefix may use the MOD R/M reg field 1344 to encode either the destination register operand or a source register operand, or to be treated as an opcode extension and not used to encode any instruction operand.

For instruction syntax that supports four operands, vvvv, the MOD R/M R/M field 1346 and the MOD R/M reg field 1344 encode three of the four operands. Bits[7:4] of the immediate value field 1209 are then used to encode the third source register operand.

**FIG. 16(B)** illustrates examples of a three-byte form of the second prefix 1201(B). In one example, a format field 1611 (byte 0 1613) contains the value C4H. Byte 1 1615 includes in bits[7:5] "R," "X," and "B" which are the complements of the same values of the first prefix 1201(A). Bits[4:0] of byte 1 1615 (shown as mmmmm) include content to encode, as needed, one or more implied leading opcode bytes. For example, 00001 implies a 0FH leading opcode, 00010 implies a 0F38H leading opcode, 00011 implies a 0F3AH leading opcode, etc.

Bit[7] of byte 2 1617 is used like W of the first prefix 1201(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1346 to encode the instruction operand that references a memory address or encode either the destination register operand or a source register operand.

Instructions that use this prefix may use the MOD R/M reg field 1344 to encode either the destination register operand or a source register operand, or to be treated as an opcode extension and not used to encode any instruction operand.

For instruction syntax that supports four operands, vvvv, the MOD R/M R/M field 1346, and the MOD R/M reg field 1344 encode three of the four operands. Bits[7:4] of the immediate value field 1209 are then used to encode the third source register operand.

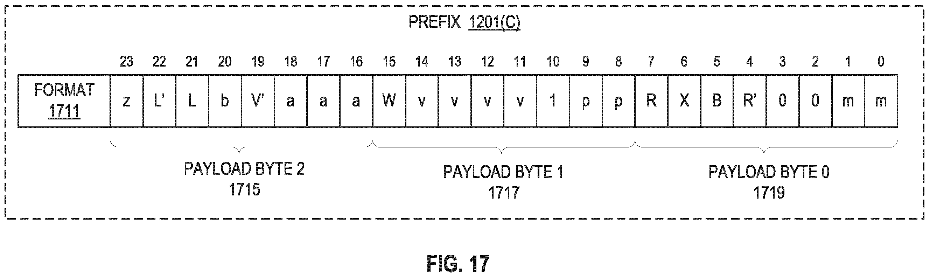

**FIG. 17** illustrates examples of a third prefix 1201(C). In some examples, the third prefix 1201(C) is an example of an EVEX prefix. The third prefix 1201(C) is a four-byte prefix.

The third prefix 1201(C) can encode 32 vector registers (e.g., 128-bit, 256-bit, and 512-bit registers) in 64-bit mode. In some examples, instructions that utilize a writemask/opmask (see discussion of registers in a previous figure, such as **FIG. 11**) or predication utilize this prefix. Opmask register allows for conditional processing or selection control. Opmask instructions, whose source/destination operands are opmask registers and treat the content of an opmask register as a single value, are encoded using the second prefix 1201(B).

The third prefix 1201(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 1201(C) is a format field 1711 that has a value, in one example, of 62H. Subsequent bytes are referred to as payload bytes 1715-1719 and collectively form a 24-bit value of P[23:0] providing specific capability in the form of one or more fields (detailed herein).

In some examples, P[1:0] of payload byte 1719 are identical to the low two mm bits. P[3:2] are reserved in some examples. Bit P[4] (R') allows access to the high 16 vector register set when combined with P[7] and the MOD R/M reg field 1344. P[6] can also provide access to a high 16 vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD R/M register field 1344 and MOD R/M R/M field 1346. P[9:8] provides opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is like W of the first prefix 1201(A) and second prefix 1211(B) and may serve as an opcode extension bit or operand size promotion.

P[18:16] specify the index of a register in the opmask (writemask) registers (e.g., writemask/predicate registers 1115). In one example, the specific value aaa = 000 has a special behavior implying no opmask is used for the particular instruction (this may be implemented in a variety of ways including the use of an opmask hardwired to all ones or hardware that bypasses the masking hardware). When merging, vector masks allow any set of elements in the destination to be protected from updates during the execution of any operation (specified by the base operation and the augmentation operation); in other one example, preserving the old value of each element of the destination where the corresponding mask bit has a 0. In contrast, when zeroing vector masks allow any set of elements in the destination to be zeroed during the execution of any operation (specified by the base operation and the augmentation operation); in one example, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differ across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Example examples of encoding of registers in instructions using the third prefix 1201(C) are detailed in the following tables.

**Table 1: 32-Register Support in 64-bit Mode**

| | 4 | 3 | [2:0] | REG. TYPE | COMMON USAGES |
|---|---|---|---|---|---|
| REG | R' | R | MOD R/M reg | GPR, Vector | Destination or Source |
| VVVV | V' | vvvv | | GPR, Vector | 2nd Source or Destination |
| RM | X | B | MOD R/M R/M | GPR, Vector | 1st Source or Destination |
| BASE | 0 | B | MOD R/M R/M | GPR | Memory addressing |
| INDEX | 0 | X | SIB.index | GPR | Memory addressing |
| VIDX | V' | X | SIB.index | Vector | VSIB memory addressing |

**Table 2: Encoding Register Specifiers in 32-bit Mode**

| | [2:0] | REG. TYPE | COMMON USAGES |
|---|---|---|---|
| REG | MOD R/M reg | GPR, Vector | Destination or Source |
| VVVV | vvvv | GPR, Vector | 2^{nd} Source or Destination |
| RM | MOD R/M R/M | GPR, Vector | 1^{st} Source or Destination |
| BASE | MOD R/M R/M | GPR | Memory addressing |
| INDEX | SIB.index | GPR | Memory addressing |
| VIDX | SIB.index | Vector | VSIB memory addressing |

**Table 3: Opmask Register Specifier Encoding**

| | [2:0] | REG. TYPE | COMMON USAGES |
|---|---|---|---|
| REG | MOD R/M Reg | k0-k7 | Source |
| VVVV | vvvv | k0-k7 | 2^{nd} Source |
| RM | MOD R/M R/M | k0-k7 | 1^{st} Source |
| {k1} | aaa | k0-k7 | Opmask |

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

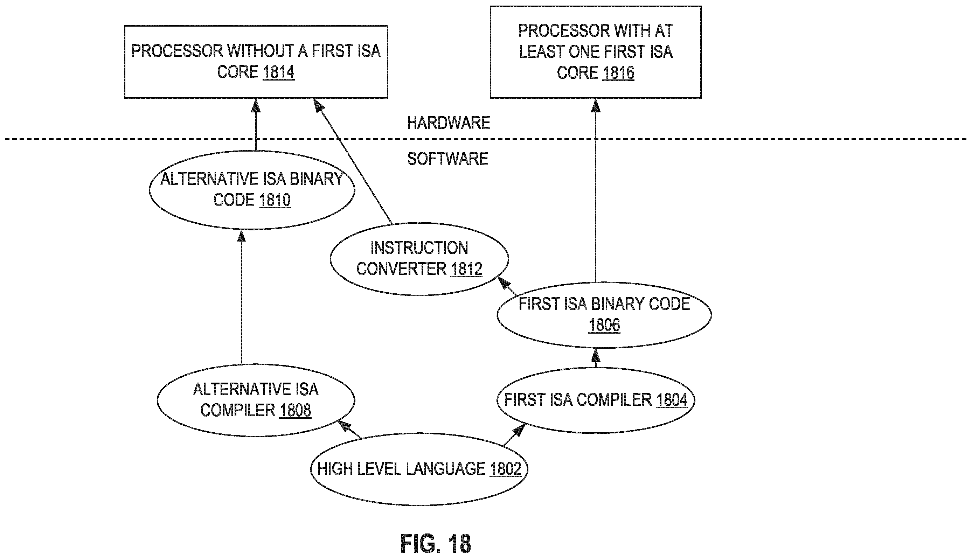

**FIG. 18** is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. **FIG. 18** shows a program in a high-level language 1802 may be compiled using a first ISA compiler 1804 to generate first ISA binary code 1806 that may be natively executed by a processor with at least one first ISA core 1816. The processor with at least one first ISA core 1816 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 1804 represents a compiler that is operable to generate first ISA binary code 1806 (e.g., object code) that can, with or without additional linkage processing, be executed on the processor with at least one first ISA core 1816. Similarly, **FIG. 18** shows the program in the high-level language 1802 may be compiled using an alternative ISA compiler 1808 to generate alternative ISA binary code 1810 that may be natively executed by a processor without a first ISA core 1814. The instruction converter 1812 is used to convert the first ISA binary code 1806 into code that may be natively executed by the processor without a first ISA core 1814. This converted code is not necessarily to be the same as the alternative ISA binary code 1810; however, the converted code will accomplish the general operation and be made up of instructions from the alternative ISA. Thus, the instruction converter 1812 represents software, firmware, hardware, or a combination thereof that, through emulation, simulation, or any other process, allows a processor or other electronic device that does not have a first ISA processor or core to execute the first ISA binary code 1806.

Components, features, and details described for any of FIGs. 1, 3, 4, 5, 6, and 7 may also optionally apply to FIG. 1. Components, features, and details described for any of the processors, decode units, or decode circuitry disclosed herein may optionally apply to any of the methods disclosed herein, which in embodiments may optionally be performed by and/or with such processors, decode units, or decode circuitry. Any of the processors described herein in embodiments may optionally be included in any of the systems disclosed herein. Any of the processors disclosed herein may optionally have any of the microarchitectures shown herein. In addition, the instructions disclosed herein may optionally have any of the features or details of the instruction formats shown herein.

References to "one example," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether explicitly described.

Processors, decode units, decode circuitry, and other components disclosed herein may be said and/or claimed to be operative, operable, capable, able, configured adapted, or otherwise to perform an operation. For example, a decoder may be said and/or claimed to decode an instruction, an execution unit may be said and/or claimed to store a result, or the like. As used herein, these expressions refer to the characteristics, properties, or attributes of the components when in a powered-off state, and do not imply that the components or the device or apparatus in which they are included is currently powered on or operating. For clarity, it is to be understood that the processors and apparatus claimed herein are not claimed as being powered on or running.

In the description and claims, the terms "coupled" and/or "connected," along with their derivatives, may have been used. These terms are not intended as synonyms for each other. Rather, in embodiments, "connected" may be used to indicate that two or more elements are in direct physical and/or electrical contact with each other. "Coupled" may mean that two or more elements are in direct physical and/or electrical contact with each other. However, "coupled" may also mean that two or more elements are not in direct contact with each other, but still co-operate or interact with each other. For example, decode circuitry may be coupled with an instruction queue, a fetch unit, or other circuitry through one or more intervening components. In the figures, arrows are used to show connections and couplings.

Some embodiments include an article of manufacture (e.g., a computer program product) that includes a machine-readable medium. The medium may include a mechanism that provides, for example stores, information in a form that is readable by the machine. The machine-readable medium may provide, or have stored thereon, an instruction or sequence of instructions, that if and/or when executed by a machine are operative to cause the machine to perform and/or result in the machine performing one or operations, methods, or techniques disclosed herein.

In some embodiments, the machine-readable medium may include a tangible and/or non-transitory machine-readable storage medium. For example, the non-transitory machine-readable storage medium may include a floppy diskette, an optical storage medium, an optical disk, an optical data storage device, a CD-ROM, a magnetic disk, a magneto-optical disk, a read only memory (ROM), a programmable ROM (PROM), an erasable-and-programmable ROM (EPROM), an electrically-erasable-and-programmable ROM (EEPROM), a random access memory (RAM), a static-RAM (SRAM), a dynamic-RAM (DRAM), a Flash memory, a phase-change memory, a phase-change data storage material, a non-volatile memory, a non-volatile data storage device, a non-transitory memory, a non-transitory data storage device, or the like. The non-transitory machine-readable storage medium does not consist of a transitory propagated signal. In some embodiments, the storage medium may include a tangible medium that includes solid-state matter or material, such as, for example, a semiconductor material, a phase change material, a magnetic solid material, a solid data storage material, etc. Alternatively, a non-tangible transitory computer-readable transmission media, such as, for example, an electrical, optical, acoustical, or other form of propagated signals - such as carrier waves, infrared signals, and digital signals, may optionally be used.

Examples of suitable machines include, but are not limited to, a general-purpose processor, a special-purpose processor, a digital logic circuit, an integrated circuit, or the like. Still other examples of suitable machines include a computer system or other electronic device that includes a processor, a digital logic circuit, or an integrated circuit. Examples of such computer systems or electronic devices include, but are not limited to, desktop computers, laptop computers, notebook computers, tablet computers, netbooks, smartphones, cellular phones, servers, network devices (e.g., routers and switches.), Mobile Internet devices (MIDs), media players, smart televisions, nettops, set-top boxes, and video game controllers.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

In the description above, specific details have been set forth to provide a thorough understanding of the embodiments. However, other embodiments may be practiced without some of these specific details. Various modifications and changes may be made thereunto without departing from the broader spirit and scope of the disclosure as set forth in the claims. The specification and drawings are, accordingly, to be regarded in an illustrative rather than a restrictive sense. The scope of the invention is not to be determined by the specific examples provided above, but only by the claims below. In other instances, well-known circuits, structures, devices, and operations have been shown in block diagram form and/or without detail to avoid obscuring the understanding of the description.

### EXAMPLE EMBODIMENTS

The following examples pertain to further embodiments. Specifics in the examples may be used anywhere in one or more embodiments.

Example 1 is a processor or other apparatus including decode circuitry to decode a first subset of instructions and a second subset of instructions. The decode circuitry is to concurrently decode at least two instructions of the first subset of instructions. The first subset of instructions is to be decoded into varying numbers of decoded instructions ranging from at least two to at least ten. The decode circuitry is only able to decode fewer or less instructions (e.g., a single instruction) of the second subset of instructions at a time than the at least two instructions of the first subset of instructions. Each of the second subset of instructions is to be decoded into at least two decoded instructions. The processor also includes an instruction queue, execution circuitry, or other circuitry coupled with the decode circuitry to receive decoded instructions from the decode circuitry.

Example 2 includes the processor of Example 1, where the decode circuitry is to concurrently decode at least four instructions of the first subset of instructions. Optionally, the decode circuitry is only able to decode a single instructions of the second subset of instructions at a time.

Example 3 includes the processor of any one of Examples 1 to 2, where the first subset of instructions includes at least two, optionally at least three, or optionally at least four instructions selected from a group consisting of an instruction to call a procedure and/or a subroutine, an instruction to compare string operands in memory, a gather instruction, a divide instruction, a dot product instruction, and an instruction to shift floating-point data.

Example 4 includes the processor of any one of Examples 1 to 3, where the second subset of instructions includes at least two, optionally at least three, or optionally at least four instructions selected from a group consisting of an instruction to read from and/or write to a control and/or configuration register, an instruction to initialize and/or enter a secure execution environment, an instruction to enter a virtual machine, an instruction to obtain processor feature and/or identification information, an instruction to create an event to be monitored, and an instruction to exchange data between a register and an input and/or output port. Optionally where the first subset of instructions does not include the plurality of instructions of the second subset of instructions selected from the group.

Example 5 includes the processor of any one of Examples 1 to 4, where the second subset of instructions includes a plurality of instructions that are each to be decoded into more decoded instructions than any instructions of the first subset of instructions are to be decoded into.

Example 6 includes the processor of any one of Examples 1 to 5, where the decode circuitry is to introduce fewer or less unused clock cycles (e.g., due to enter latency and/or exit latency) when decoding the first subset of instructions than unused clock cycles introduced (e.g., due to enter latency and/or exit latency) when decoding the second subset of instructions.

Example 7 includes the processor of any one of Examples 1 to 6, where the decode circuitry is to concurrently output at least two decoded instructions respectively decoded from the at least two instructions of the first subset of instructions. Optionally where the decode circuitry is only able to output fewer decoded instructions (e.g., a single decoded instruction) decoded from said fewer instructions of the second subset of instructions at a time than the at least two decoded instructions.

Example 8 includes the processor of any one of Examples 1 to 7, where the decode circuitry includes at least two decode units (e.g., optionally at least four, at least eight, more than eight decode units). Each of the at least two decode units is to concurrently decode a different one of the at least two instructions (e.g., optionally at least four, at least eight, more than eight instructions) of the first subset of instructions. The decode circuitry also optionally includes a shared decode circuitry coupled with at least two decode units to be shared by the at least two decode units, where the shared decode circuitry is only able to decode a single instruction of the second subset of instructions at a time.

Example 9 includes the processor of Example 8, where the at least two decode units are not able to decode the at least half or all of the second subset of instructions of instructions.

Example 10 includes the processor of any one of Examples 8 to 9, where a first decode unit of the at least two decode units is to decode a first instruction of the at least two instructions of the first subset of instructions. When the first instruction is decoded into at least five decoded instructions, the first decode unit is to output a final decoded instruction of the at least five decoded instructions on a clock cycle and is to output a decoded instruction decoded from another instruction on a clock cycle immediately after the clock cycle.

Example 11 includes the processor of any one of Examples 8 to 10, where a first decode unit of the at least two decode units is to output a final decoded instruction for an instruction of the first subset of instructions on a clock cycle. The first decode unit is to decode a first instruction of the at least two instructions of the first subset of instructions and output a first decoded instruction decoded from the first instruction on a clock cycle immediately after the clock cycle.

Example 12 includes the processor of any one of Examples 8 to 11, where each of the at least two decode units includes a programmable logic array (PLA) based decode circuitry. Optionally the shared decode circuitry includes a shared read only memory (ROM) based decode circuitry.

Example 13 includes the processor of any one of Examples 8 to 12, where a first decode unit of the at least two decode units includes a first programmable logic array (PLA) based decode circuitry to decode a first instruction of the at least two instructions of the first subset of instructions. Optionally, the first PLA based decode circuitry is to determine, from the first instruction, an index and a count of a total number of decoded instructions used to implement the first instruction. Optionally, the first PLA based decode circuitry is to output a first decoded instruction, of the total number of decoded instructions, selected by the index from a PLA. Optionally, the first PLA based decode circuitry is to determine a clock cycle to decode another instruction based on the count.

Example 14 is a method including concurrently decoding a first number of instructions of a first subset of instructions. The first number is at least two. The first subset of instructions is to be decoded into varying numbers of decoded instructions ranging from at least two to at least ten. The method also includes decoding a second number of instructions of a second subset of instructions at a time. The second number is at least one and no more than the first number. Each of the second subset of instructions to be decoded into at least two decoded instructions.

Example 15 includes the method of Example 14, where the first subset of instructions includes at least two, optionally at least three, or optionally at least four instructions selected from a group consisting of an instruction to call a procedure and/or a subroutine, an instruction to compare string operands in memory, a gather instruction, a divide instruction, a dot product instruction, and an instruction to shift floating-point data. Optionally, the second subset of instructions includes at least two, optionally at least three, or optionally at least four of instructions selected from a group consisting of an instruction to read from and/or write to a control and/or configuration register, an instruction to initialize and/or enter a secure execution environment, an instruction to enter a virtual machine, an instruction to obtain processor feature and/or identification information, an instruction to create an event to be monitored, and an instruction to exchange data between a register and an input and/or output port. Optionally, the first subset of instructions does not include the plurality of instructions of the second subset of instructions selected from the group.

Example 16 includes the method of any one of Examples 14 to 15, where the second subset of instructions includes a plurality of instructions that are each to be decoded into more decoded instructions than any instructions of the first subset of instructions are to be decoded into.

Example 17 is a system including a processor including decode circuitry to decode a first subset of instructions and a second subset of instructions. The decode circuitry is to concurrently decode at least two instructions of the first subset of instructions. The first subset of instructions is to be decoded into varying numbers of decoded instructions ranging from at least two to at least ten. The decode circuitry is only able to decode fewer or less instructions of the second subset of instructions at a time than the at least two instructions of the first subset of instructions. Each of the second subset of instructions is to be decoded into at least two decoded instructions. The system also includes a dynamic random access memory (DRAM) coupled with the processor.

Example 18 includes the system of Example 17, where the decode circuitry is to concurrently decode at least four instructions of the first subset of instructions. Optionally, where the decode circuitry is only able to decode a single instructions of the second subset of instructions at a time.

Example 19 includes the system of any one of Examples 17 to 18, where the first subset of instructions includes at least two, optionally three, or optionally four instructions selected from a group consisting of an instruction to call a procedure and/or a subroutine, an instruction to compare string operands in memory, a gather instruction, a divide instruction, a dot product instruction, and an instruction to shift floating-point data. Optionally, where the second subset of instructions includes at least two, optionally three, or optionally four instructions selected from a group consisting of an instruction to read from and/or write to a control and/or configuration register, an instruction to initialize and/or enter a secure execution environment, an instruction to enter a virtual machine, an instruction to obtain processor feature and/or identification information, an instruction to create an event to be monitored, and an instruction to exchange data between a register and an input and/or output port. Optionally, where the first subset of instructions does not include the plurality of instructions of the second subset of instructions selected from the group.

Example 20 includes the system of any one of Examples 17 to 19, where the decode circuitry includes at least two decode units, where each of the at least two decode units is to concurrently decode a different one of the at least two instructions of the first subset of instructions. Optionally, where the decode circuitry includes a shared decode circuitry coupled with at least two decode units to be shared by the at least two decode units, where the shared decode circuitry is only able to decode a single instruction of the second subset of instructions at a time.

Example 21 is an apparatus comprising circuitry or means for concurrently decoding at least two instructions of a first subset of instructions. The first subset of instructions is to be decoded into varying numbers of decoded instructions ranging from at least two to at least ten. The apparatus also includes circuitry or means for decoding at least one instruction of a second subset of instructions, but no more instructions of the second subset of instructions, at a time than the at least two instructions of the first subset of instructions. Each of the second subset of instructions is to be decoded into at least two decoded instructions.

Example 22 is a processor or other apparatus operative to perform the method of any one of Examples 14-16.

Example 23 is a processor or other apparatus that includes means for performing the method of any one of Examples 14-16.

Example 24 is a processor or other apparatus that includes any combination of units and/or logic and/or circuitry and/or means operative to perform the method of any one of Examples 14-16.

## Claims

1. A processor comprising:
decode circuitry to decode a first subset of instructions and a second subset of instructions,
wherein the decode circuitry is to concurrently decode at least two instructions of the first subset of instructions, the first subset of instructions to be decoded into varying numbers of decoded instructions ranging from at least two to at least ten,
wherein the decode circuitry is only able to decode fewer instructions of the second subset of instructions at a time than the at least two instructions of the first subset of instructions, each of the second subset of instructions to be decoded into at least two decoded instructions; and
circuitry coupled with the decode circuitry to receive decoded instructions from the decode circuitry.

2. The processor of claim 1, wherein the decode circuitry is to concurrently decode at least four instructions of the first subset of instructions, and wherein the decode circuitry is only able to decode a single instructions of the second subset of instructions at a time.

3. The processor of any one of claims 1 to 2, wherein the first subset of instructions includes a plurality of instructions selected from a group consisting of an instruction to call a procedure and/or a subroutine, an instruction to compare string operands in memory, a gather instruction, a divide instruction, a dot product instruction, and an instruction to shift floating-point data.

4. The processor of any one of claims 1 to 3, wherein the second subset of instructions includes a plurality of instructions selected from a group consisting of an instruction to read from and/or write to a control and/or configuration register, an instruction to initialize and/or enter a secure execution environment, an instruction to enter a virtual machine, an instruction to obtain processor feature and/or identification information, an instruction to create an event to be monitored, and an instruction to exchange data between a register and an input and/or output port, and wherein the first subset of instructions does not include the plurality of instructions of the second subset of instructions selected from the group.

5. The processor of any one of claims 1 to 4, wherein the second subset of instructions includes a plurality of instructions that are each to be decoded into more decoded instructions than any instructions of the first subset of instructions are to be decoded into.

6. The processor of any one of claims 1 to 5, wherein the decode circuitry is to introduce fewer unused clock cycles when decoding the first subset of instructions than unused clock cycles introduced when decoding the second subset of instructions.

7. The processor of any one of claims 1 to 6, wherein the decode circuitry is to concurrently output at least two decoded instructions respectively decoded from the at least two instructions of the first subset of instructions, and wherein the decode circuitry is only able to output fewer decoded instructions decoded from said fewer instructions of the second subset of instructions at a time than the at least two decoded instructions.

8. The processor of any one of claims 1 to 7, wherein the decode circuitry includes:
at least two decode units, wherein each of the at least two decode units is to concurrently decode a different one of the at least two instructions of the first subset of instructions; and
a shared decode circuitry coupled with at least two decode units to be shared by the at least two decode units, wherein the shared decode circuitry is only able to decode a single instruction of the second subset of instructions at a time.

9. The processor of claim 8, wherein the at least two decode units are not able to decode the second subset of instructions of instructions.

10. The processor of any one of claims 8 to 9, wherein a first decode unit of the at least two decode units is to decode a first instruction of the at least two instructions of the first subset of instructions, and wherein, when the first instruction is decoded into at least five decoded instructions, the first decode unit is to output a final decoded instruction of the at least five decoded instructions on a clock cycle and is to output a decoded instruction decoded from another instruction on a clock cycle immediately after the clock cycle.

11. The processor of any one of claims 8 to 10, wherein a first decode unit of the at least two decode units is to output a final decoded instruction for an instruction of the first subset of instructions on a clock cycle, and wherein the first decode unit is to decode a first instruction of the at least two instructions of the first subset of instructions and output a first decoded instruction decoded from the first instruction on a clock cycle immediately after the clock cycle, wherein each of the at least two decode units includes a programmable logic array (PLA) based decode circuitry, and wherein the shared decode circuitry includes a shared read only memory (ROM) based decode circuitry.

12. A method comprising:
concurrently decoding at least two instructions of a first subset of instructions, the first subset of instructions to be decoded into varying numbers of decoded instructions ranging from at least two to at least ten; and
decoding at least one instruction of a second subset of instructions but no more instructions of the second subset of instructions at a time than the at least two instructions of the first subset of instructions, each of the second subset of instructions to be decoded into at least two decoded instructions.

13. The method of claim 12, wherein the first subset of instructions includes a plurality of instructions selected from a group consisting of an instruction to call a procedure and/or a subroutine, an instruction to compare string operands in memory, a gather instruction, a divide instruction, a dot product instruction, and an instruction to shift floating-point data, wherein the second subset of instructions includes a plurality of instructions selected from a group consisting of an instruction to read from and/or write to a control and/or configuration register, an instruction to initialize and/or enter a secure execution environment, an instruction to enter a virtual machine, an instruction to obtain processor feature and/or identification information, an instruction to create an event to be monitored, and an instruction to exchange data between a register and an input and/or output port, and wherein the first subset of instructions does not include the plurality of instructions of the second subset of instructions selected from the group.

14. The method of any one of claims 12 to 13, wherein the second subset of instructions includes a plurality of instructions that are each to be decoded into more decoded instructions than any instructions of the first subset of instructions are to be decoded into.

15. A computer program comprising instructions which, when executed by a processor, causes the processor to perform the method of any one of claims 12 to 14.
